# EUROPEAN PATENT APPLICATION

(11) **EP 1 331 147 A2**
(43) Date of publication of application: **30.07.2003**
(21) Application number: 03250402.9
(22) Date of filing: 22.01.2003
(51) Int. Cl.: B60R 25/00

(54) **Vehicle access control and start system**

(30) Priority: 24.01.2002 GB 0201547
(71) Applicant: ArvinMeritor Light Vehicle Systems (UK) Ltd, Birmingham, West Midlands, B30 3BW (GB)
(72) Inventor: Willats, Robin, Cottam, Preston PR4 0NQ (GB); Emson, John, West Bromwich, West Midlands,B71 3SP (GB); Fisher, Sidney, Redditch, Worcestershire,B97 5YS (GB); Kalsi, Gurbinder, Oldbury, West Midlands, B68 0NF (GB); Spurr, Nigel, Solihull, West Midlands, B90 2PS (GB); Didier, Jean, 88650 Anould (FR); Dixon, Alain, Dodleston, Chester, CH4 9NU (GB); Drysdale, Stephen, Duston, Northampton, NN5 4BG (GB)
(74) Representative: Jones, John Bryn

(57) **Abstract**

A vehicle security sub-system comprising person sensing means (54) arranged to determine whether a person is located in the vehicle (12), first authorisation device detection means (52) arranged to detect the presence of a cooperating authorisation device having a first level of authorisation in the vehicle, a second authorisation device detection means (53) arranged to detect the presence of a cooperating authorisation device in an area around the driver's seat and a controller (24), wherein, the controller is arranged to determine the locked state of at least one vehicle closure (14) and the state of a start system of an associated vehicle (12) in response to inputs from the detection means.

## Description

The present invention relates to a vehicle access control and start system. Particularly, but not exclusively, the present invention relates to a vehicle access control system start system that operates using a passive entry authorisation device carried by a vehicle user.

It is known to use keys, active remote keyless entry (RKE) and passive RKE entry type devices for gaining access to a vehicle and/or starting the engine of the vehicle once inside. Passive entry systems comprise a transceiver type scanning device that is associated with the vehicle and which scans for the existence of RKE devices within a given range of the vehicle by using radio frequency waves, for example.

Access control systems have hitherto operated in a relatively simplistic manner and have not been fully integrated into further vehicle systems, meaning that the full potential of such devices to improve vehicle ease of use, security and safety has not been realised.

Access control systems may comprise a plurality of subsystems and devices which operate at various stages of a vehicle entry, start, stop and exit sequence. Prior art devices suffer from a number of problems. These problems are discussed below:

When either key based "central locking" or remote keyless active entry or passive entry systems are used, once the access control system associated with the vehicle has determined that access is to be permitted, it is usual that all closures are unlocked.

However, when a vehicle user approaches a vehicle it is usual for him/her to proceed directly towards the closure at which they wish to enter the passenger compartment or storage area of the vehicle, without first carrying out a visual inspection around the perimeter of the vehicle. This behaviour enables an unauthorised person such as a potential hijacker to hide behind the vehicle in a blind spot and subsequently gain unauthorised access to the vehicle once all of the closures are unlocked. Clearly, such a situation is undesirable.

Furthermore in relation to passive entry systems, it is desirable from the point of view of the vehicle user that the rate of scanning by such devices is relatively high so that the user does not have to wait for a relatively long period of a time before being able to enter the vehicle. However, the higher the scan rate, the greater the rate at which power is consumed by the scanning device.

The power available from either the vehicle battery or a dedicated power source for the scanning device is effectively finite when there is no other source such as a running engine to charge the battery/power source. Thus, if a vehicle having such a scanning device is left for an extended period of time whilst operating at a high scanning frequency, the power source may be exhausted which makes entry into the vehicle difficult and/or prevents the starting of the vehicle.

A number of problems are associated with the use of conventional exterior door handles. Because of the necessary positioning of exterior door handles in an ergonomic position close to the upper edge of the door panel (where they easily fall to hand) and remote from the door hinge in the case of conventional vehicle passenger doors, the styling freedom of the vehicle is restricted. Additionally, positioning is restricted due to the desire for an easy connection to the vehicle latch mechanism which is usually mounted on the rear face of a passenger door.

Another problem with conventional handles is associated with the punching out of a hole in the outer door panel. The hole is needed to accommodate the handle, but may also crease the exterior panel thus compromising its aesthetics. Such holes may also compromise the security of the vehicle and the fact that it is difficult to fit a handle flush with the exterior door panel results in the use of handles that generate wind noise and drag whilst the vehicle is in motion. The use of conventional door handles also adds weight to the vehicle and adds to the number of mechanical parts.

Additionally conventional locking systems require a number of moving parts whose operation may be compromised by dust ingress and wear, for example. Such locks are often relatively noisy in operation and may be relatively slow to change between locked and unlocked states. A further problem with know locking systems is that they do not interface well with electrically operated passive and active entry systems.

If entry permission to a vehicle is granted following a signal being received by an active or passive RKE device, the entry system will signal the unlocking of the vehicle locks. However, as locking mechanisms are essentially mechanical in operation, one or more electrical motors must be fitted to a locking mechanism so as to convert the signals from the entry system to operate the locking mechanism.

Typically, there are three lock states for vehicle door latches: unlocked, in which the door may be unlatched from inside and outside the vehicle; locked, in which the door may be unlatched from the interior but not the exterior of the vehicle (eg using an inside door handle); and double locked (superlocked) in which neither intervention with the interior or exterior handles etc of the door will unlatch the door - unlatching may only be achieved by using a key, RKE device or other authorisation device to first unlock the door.

A further problem with passive entry systems arises when attempting to determine the appropriate locked/unlocked status of the vehicle doors dependent upon the location of an authorised user in relation to the vehicle. In the absence of such a system, the security of the vehicle and/or personal safety of the user may be compromised.

Another problem with passive entry systems arises in relation to starting a vehicle if the system operates with two levels of authorisation in which non-driving vehicle users' authorisation devices have only a first level of authorisation in order to access the vehicle, whereas drivers carry authorisation devices having both the first and second levels of authorisation in order to both enter the vehicle and start the vehicle. In such situations, it is undesirable for a user having the second level of authorisation and sitting in a passenger seat of the vehicle to activate the start system, because this means that a person having only the first level of authorisation, or no authorisation at all, can sit in the driver's seat and be able to start the vehicle.

A further problem that may be encountered is the possibility that once the start system has been energised, a user could start the vehicle whilst not being properly seated in the driver's seat.

Furthermore, vehicle doors, in particular vehicle passenger doors are provided with a separate inside door engagement means such as a pull handle and inside release means such as an inside release handle. The use of two separate components for these functions increases the part count and door assembly time, and hence the overall assembly cost. It also restricts the design freedom of the inside door trim upon which these components are typically mounted.

It is known to fit power unlatching systems to vehicles. Some systems merely require a switch to be pressed in order to send an unlatching signal to a corresponding door latch. However, there is a risk of accidental actuation if such switches are mounted at an accessible location in the vehicle interior. This is dangerous for the vehicle occupants, particularly if the vehicle is in motion, since they risk falling out of the vehicle. It is also desirable to include a mechanical connection between the release handle and the latch so that users may be able to exit the vehicle even when there is a loss of power to the latch.

The present invention seeks to overcome or at least mitigate the problems of the prior art.

One aspect of the present invention provides a vehicle security sub-system comprising person sensing means arranged to determine whether a person is located in the vehicle, first authorisation device detection means arranged to detect the presence of a cooperating authorisation device having a first level of authorisation in the vehicle, a second authorisation device detection means arranged to detect the presence of a cooperating authorisation device in an area around the driver's seat and a controller, wherein the controller is arranged to determine the locked state of at least one vehicle closure and the state of a start system of an associated vehicle in response to inputs from the detection means.

A second aspect of the present invention provides a vehicle latch sub-system comprising a lockable latch mechanism having a rheological fluid acting in a first state to unlock the latch and in a second state to unlock the latch, the sub-system further comprising touch sensitive unlocking means arranged such that when touched the unlocking means signals the change of state of the fluid to effect locking or unlocking according to predetermined criteria.

A third aspect of the invention provides a vehicle access control and start system comprising at least two of the following sub-systems:
a) an access control system for a vehicle having at least two closures, the system comprising a receiving means, the receiving means being so constructed and arranged as to determine the angular position of an associated authorisation device relative to the receiving means thereby enabling the system to determine the appropriate vehicle closure(s) to unlock and/or unlatch;
b) an access control system for a vehicle having two or more closures, the system, in use, determining the appropriate closures to unlock and/or unlatch in response to the period of time for which an input signal is received by the access control system from an authorisation device;
c) a transceiver for use in periodically scanning for the existence of at least one corresponding remote authorisation device wherein, in use, the rate at which the transceiver scans for the authorisation device decreases as the time since the detection of a previous authorisation device increases, such that the rate of a power consumption of the transceiver reduces during periods of non-use;
d) a touch sensitive access means fitted to a vehicle and arranged in use, when touched, to unlatch a door of a said vehicle and/or facilitate the deployment of an engagement means to be engaged by a vehicle user to assist in the opening or closing of the vehicle door;
e) a foot operated access means fitted to a vehicle arranged in use, when actuated, to unlatch a vehicle door and/or facilitate the deployment of an engagement means to be engaged by a vehicle user to assist in opening or closing the vehicle door;
f) an exterior mirror access means for a vehicle, the mirror being arranged, in use, such that engagement thereof by a vehicle user unlatches a vehicle door and/or facilitates deployment of an engagement means to be engaged by a vehicle user to assist in opening or closing the door;
g) engagement means for engagement by a vehicle user to assist in the opening or closing of a vehicle door, the engagement means being a handle, the handle being deployed from a retracted position, in use, in response to a signal from vehicle entry or exit means;
h) engagement means for engagement by a vehicle user to assist in the opening or closing of a vehicle door, the means being the waist line portion of a vehicle door, a window pane portion of the vehicle door being retracted in use, in response to a signal from a vehicle entry means so as to permit said engagement;
i) a mechanism, comprising a rheological fluid in operable connection with an output and an input, the fluid acting so as to in a first state prevent actuation of the output upon actuation of the input and in a second state permit such actuation;
j) a vehicle locking system comprising person sensing means, authorisation device detection means and a controller, the sensing means being arranged so as to determine whether a person is located in the vehicle and the authorisation device detection means is arranged to detect the presence of a co-operating authorisation device within the vehicle, wherein, in use, the locked state of the vehicle is controlled by the controller in response to a signal supplied by the sensing means and a signal supplied by the authorisation device detection means;
k) a start system for a vehicle, the system comprising scanning means arranged so as to scan an area around a driver's seat of the vehicle to detect an authorisation device having a particular level of authorisation so as to ensure that only a person carrying an authorisation device having this level of authorisation and positioned in the area around the driver's seat may start the vehicle;
l) a start system for a vehicle comprising first and second switches, wherein both switches must be actuated in any order to enable the vehicle to start and wherein the switches are sufficiently mutually spaced to prevent actuation thereof by a single hand of a vehicle user;
m) an inside door release mechanism for a vehicle comprising first and second input means arranged in a mutually spaced relationship on a door inner face and a latch wherein the mechanism is so constructed and arranged to be capable of causing the latch to be unlatched when both input means are actuated simultaneously; and/or
n) a door release and engagement mechanism for a vehicle comprising a combined inside release and door pull handle and a latch operably connected thereto, wherein, in use, the operable connection is disabled when the door is ajar and/or unlatched so as to prevent the latch from being mis-set prior to subsequent re-closure of the door.

Embodiments of the present invention will now be described, by way of example only, with reference to the accompanying drawings in which:-
Figure 1A is a schematic block diagram illustrating a vehicle incorporating a remote keyless passive entry system according to an embodiment of the present invention;
Figure 1B is a schematic block diagram illustrating a vehicle incorporating a remote keyless active entry system according to another embodiment of the present invention;
Figure 1C is a schematic block diagram illustrating a vehicle incorporating a key operated active entry system according to another embodiment of the present invention;
Figure 2 is a plan view of the external directional transceiver of Figure 1A;
Figure 3 is a plan view of the vehicle of Figure 1A illustrating the access control system in use;
Figure 4 is a plan view of the receiver of Figure 1B;
Figure 5 is a plan view of the vehicle of Figure 1B illustrating the access control system incorporating the receiver of Figure 1B in use;
Figures 6A and 6B are plan views of the vehicle of 1B having an alternative access control system to the embodiment of Figure 5;
Figure 7 is a flow chart illustrating the operation of the access control system of Figures 6A and 6B.
Figure 8 is a graph illustrating a decrease in scan rate over time of the external directional transceiver of Figure 1A;
Figure 9 is a schematic diagram of a vehicle locking mechanism according to another embodiment of the present invention;
Figure 10 illustrates the operation of the mechanism of Figure 9 when in a locked condition;
Figure 11 illustrates the operation of mechanism of Figure 9 in an unlocked condition;
Figure 12A is a perspective view of a portion of the vehicle including access means according to one embodiment of the present invention;
Figure 12B is a cross sectional view through a vehicle door having access means according to another embodiment of the present invention;
Figure 12C is a cut away side elevational view through a door having access means according to yet another embodiment of the present invention;
Figure 13 is a perspective view of a portion of the vehicle incorporating access means according to another embodiment of the present invention;
Figure 14 is a perspective view of the portion of a vehicle including access means according to a further embodiment of the present invention;
Figure 15 is a perspective view of a portion of the vehicle including engagement means according to a still further embodiment of the present invention;
Figure 16 is a perspective view of a portion of the vehicle including engagement means according to another embodiment of the present invention;
Figure 17 is a perspective view of an inner face of a door incorporating a inside release mechanism according to another embodiment of the present invention;
Figure 18 is a flow chart illustrating the functioning of the mechanism of Figure 17;
Figure 19 is a perspective view of an inner face of a vehicle door incorporating an inside release mechanism according to a further embodiment of the present invention;
Figures 20A and 20B are side and end views respectively of a latch of one embodiment of the present invention in a latched state;
Figures 21A and 21B are side and end views respectively of the latch of Figures 20A and 20B in an unlatched state;
Figure 22 is a flow chart illustrating the functioning of the inside release mechanism of this embodiment of the present invention;
Figure 23 is a flow chart illustrating the overall functioning of a passive entry system according to an embodiment of the present invention as the vehicle is entered and started; and
Figure 24 is a flow chart illustrating overall functioning of the passive entry system when a vehicle user stops and exits the vehicle.

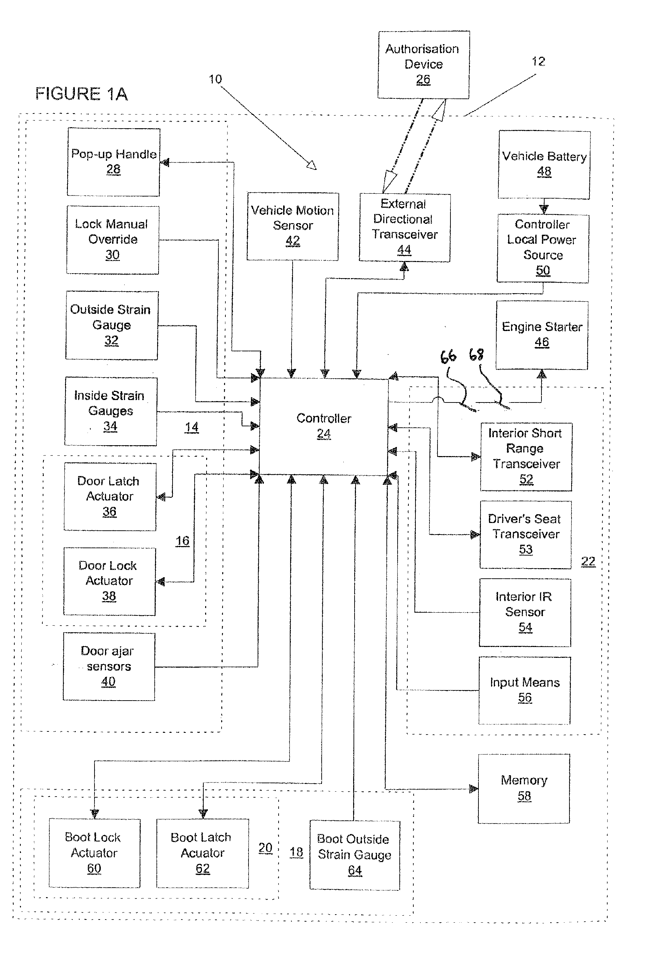

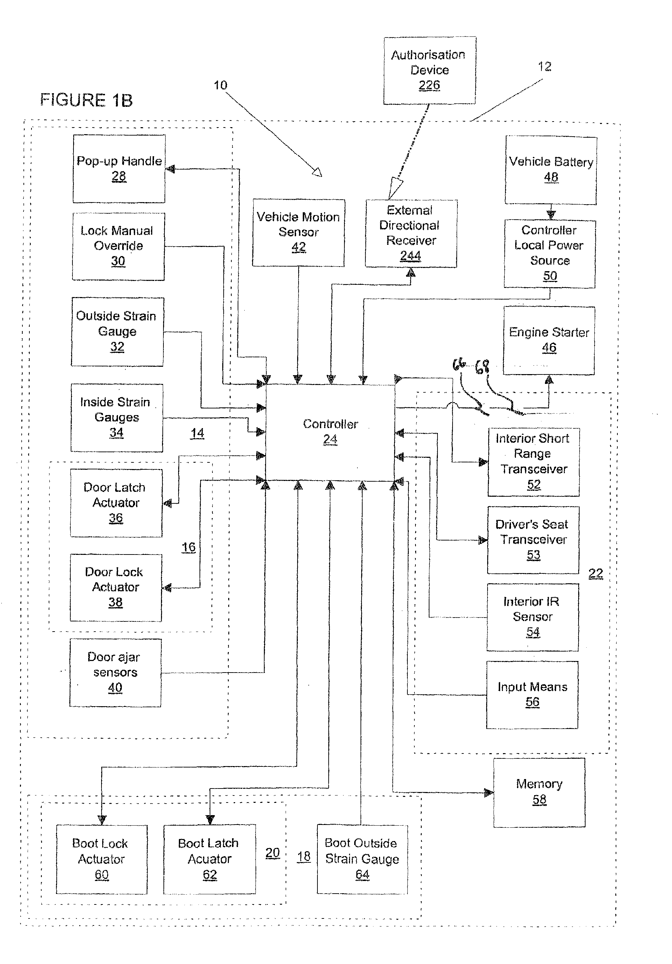

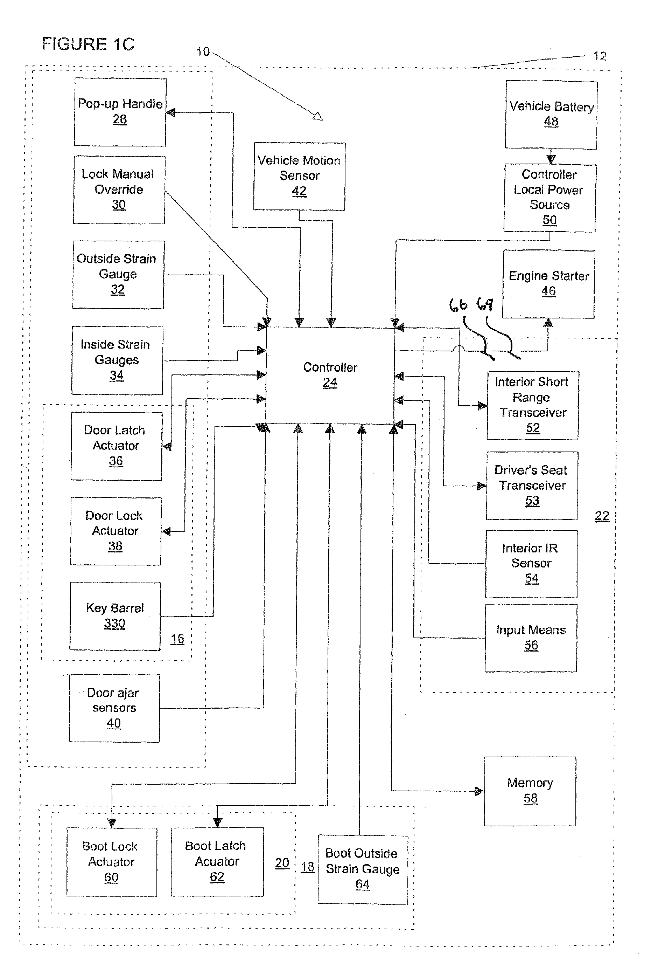

Referring to Figure 1A, a vehicle 12 incorporating an access control system 10 according to an embodiment of the present invention is illustrated schematically. The vehicle 12 comprises a door 14 having a door latch 16, a passenger compartment 22 and a luggage compartment which in this embodiment is a boot (trunk) 18 having a boot latch 20.

At the heart of the access control system 10 is a controller 24 which may be a standalone microprocessor, or may be integrated into the overall vehicle ECU (electronic control unit). The controller 24 draws its power from the vehicle battery 48 preferably via a local backup power source 50. This enables the access control system 10 to operate even when the vehicle has a flat battery.

The controller 24 is in communication with a plurality of input and output devices through electrical connections illustrated by the arrows of Figure 1A. The arrows may represent wires of a conventional wiring loom, or any other suitable form of connection (eg a radio frequency connection using a system such as BLUETOOTH™) with the direction of the arrows indicating the direction of signal travel. In this embodiment, the controller 24 is in communication with a pop-up handle 28, lock manual override 30, outside strain gauge 32, inside strain gauge 34, door latch actuator 36, door lock actuator 38 and door ajar sensor 40 of the passenger door 14. In this embodiment only one passenger door 14 is illustrated for reasons of clarity. However, it will be appreciated that similar input and output devices maybe provided on further closures including front and rear passenger doors.

In relation to the boot 18, the controller 24 is in communication with a boot lock actuator 60, boot latch actuator 62 and boot outside strain gauge 64. The vehicle boot may be replaced by a lift gate, tail gate or rear door depending upon the type of vehicle 12 in which the access control system 10 is installed.

In the passenger compartment 22 of the vehicle 12 the controller 24 is in communication with an interior short range transceiver 52 capable of detecting an identification means in the form of an authorisation device 26 (e.g. a transponder card) when the authorisation device (AD) is positioned with passenger compartment 22, driver's seat transceiver 53 capable of detecting the AD 26 when positioned in the vicinity of the driver's seat, infra red sensor 54 capable of detecting the presence of people in the passenger compartment 22, input means 56 such as an alphanumeric key pad, and a pair of switches 66 and 68 positioned on the vehicle steering wheel (not shown).

The controller 24 is additionally in communication with a vehicle motion sensor 42, an external directional transceiver capable of detecting the presence of authorisation device 26 when it is outside the vehicle 12, interrogating the said device and determining the angular position of the device 26 relative to the vehicle 12. The controller 24 has a further output to a vehicle engine starter system 46 and has associated memory 58 in which the state of various devices may be stored, in addition to any programming instructions. The memory 58 preferably comprises a rewritable portion capable of storing its contents even if no power is supplied thereto.

The operation of these various devices and sub-systems will be described in greater detail below. It will be appreciated that various sub-systems and devices may be employed in various combinations, and that all of the aforesaid do sub-systems need not be present to provide a functional access control system.

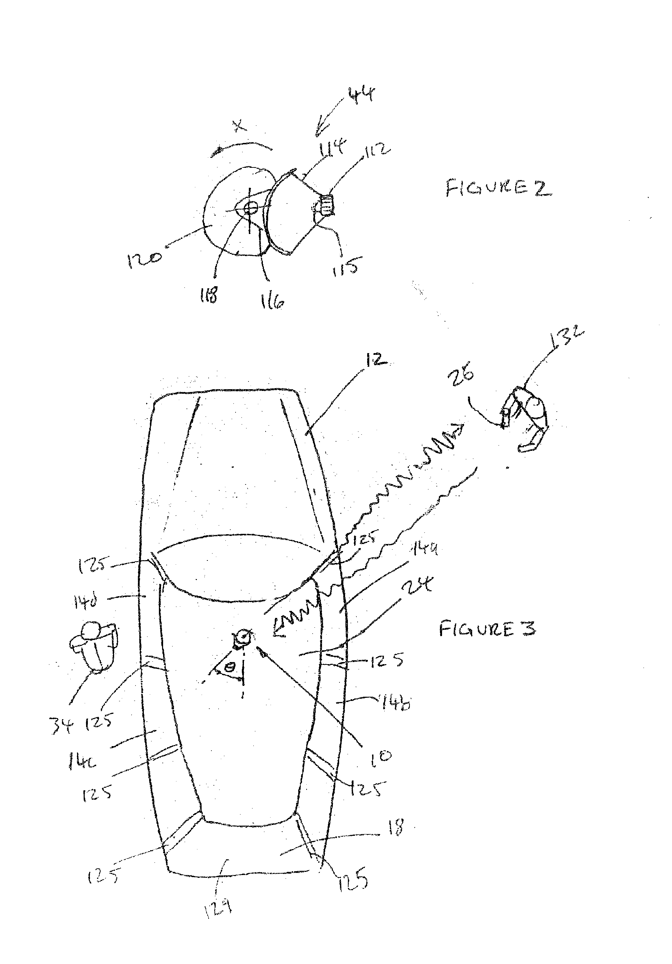

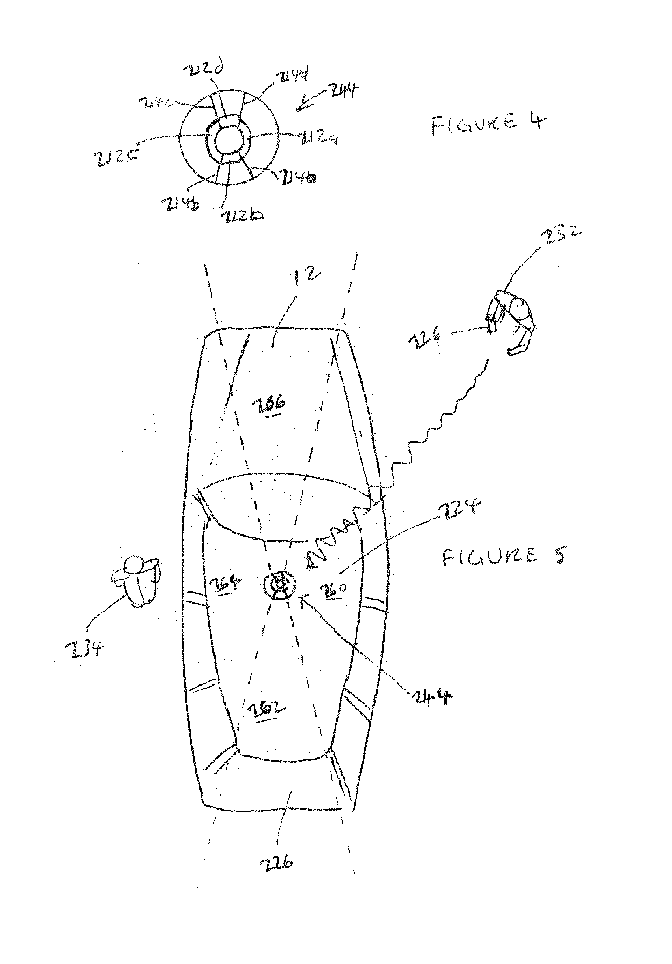

Turning to Figures 2 to 5, one aspect of the invention relates to means to enable a vehicle user to unlock one or more vehicle closure latches.

Referring to Figure 2, there is shown a combined external transmitting and receiving means (hereinafter referred to as transceiver 44). The transceiver 44 comprises a transmitter 115 and a receiver 112 mounted at the narrow end of a mouth 114. The transmitter 115 transmits and the receiver 112 detects signals of a suitable form of electromagnetic radiation or sound waves. In a preferred embodiment, radio frequency (RF) waves such as microwaves are transmitted and detected. The angle over which the signal is transmitted and detected is limited by the angle between the sides of the mouth 114. It can be seen that in Figure 2, the angle is approximately 90°, although it may be varied according to particular user requirements.

The transmitter 115, receiver 112 and mouth 114 are fixedly mounted on a rotatable shaft 118 by a bracket 116, the shaft 118 being an output shaft of a motor (not shown) such as a suitable electric motor arranged to enable the transmitter, receiver and mouth to rotate in a direction X about an axis substantially perpendicular to the axis in which transmitter is directed. A rotary encoder 120 is provided to determine the relative rotary position of the receiver 112.

Turning now to Figure 3, a five door estate (station wagon) type vehicle 12 is illustrated having four side doors 14a, 14b, 14c, 14d to access the passenger compartment 22 and rear tailgate 18 to access the storage compartment 129. However, the present invention may be usefully provided in any vehicle having at least two closures. The transceiver means 44 is mounted on the vehicle 12 in a position where a substantially unobstructed 360° signal transmission and reception may occur. In this embodiment the transceiver 44 is mounted to the underside of the roof of the passenger compartment 22 of the vehicle. In this position, transmission and reception is only hindered by the relatively narrow door pillars 125 of the vehicle.

Referring to Figure 1A in conjunction with Figure 3, under normal operating conditions when power is supplied to the system from the vehicle battery 48, for example, the controller 24 signals the motor to cause the transceiver 44 to rotate continuously through a full 360° arc whilst simultaneously signalling the transmitter 115 to transmit an interrogation signal so as to locate any AD 26 in range. In this embodiment the AD 26 is in the form of a transponder card or the like normally carried by an authorised vehicle user 132.

If a compatible AD 26 is located within the range of the transmitter 115 the interrogation signal causes AD 26 to power-up and transmit a corresponding coded response signal to the receiver 112. Because the signal is sent using electromagnetic radiation, the response signal is sent almost instantaneously and there is therefore no danger of the receiver having rotated out of range of the response signal when it is sent. The rate of rotation of the transceiver 44 is advantageously sufficiently high to ensure that approaching authorised users are detected before reaching the vehicle.

When a signal is detected by the receiver 112 it is transmitted to the controller 24 for authentication. If it is determined that the AD 26 is authorised for the particular vehicle 10 in question, the controller 24 queries the position encoder 120 of the transceiver 44 as to the angle θ of the transceiver 44 at the point at which a signal from the AD 26 was received by the receiver 112. The controller 24 then compares this angle θ to values stored within the memory 58 associated with the controller. For a given range of angles, the memory stores a predetermined instruction as to which of the vehicle latches 16, 20 should be unlocked. The controller 24 processes this instruction and signals the door lock actuator 38 of an appropriate one or more of the right front, right rear, left front and left rear door latches 16 for doors 14a, 14b, 14c and 14d to unlock respectively as well as storage compartment closure lock actuator 60 for the tailgate 18.

For example, if an authenticated signal is received from the AD 26, as shown in Figure 3, the angular position θ of this is determined by the position encoder 120 as being approximately 45°. The controller 24 then determines from its associated memory 58 that the authorised user 132 is at the right hand side of the vehicle and will thus signal door lock actuators 38 to unlock the right front and right rear door latches 16. If, however, the AD 26 is detected at an angle θ of approximately 180°, the controller 24 will signal the actuator 60 to unlock the storage compartment latch 20 and if an angle θ of 270° is detected, the controller will signal the unlocking of the left front and left rear door lock actuators 38 to unlock latches 16.

Where two or more persons carrying ADs 26 approach different sides of the vehicle 12, the access control system 10 signals the unlocking of vehicle doors on both sides of the vehicle.

In one embodiment, two levels of authorisation may exist, one for an authorised vehicle *driver,* and a second for authorised vehicle *passengers.* In this embodiment, the controller 24 distinguishes between the authorisation levels and only unlocks the driver's door latch 16 if a person carrying an AD 26 having a driver's level of authorisation approaches this side of the vehicle. If a person 132 carrying an AD 26 enters the vehicle, and wishes to permit entry to other users not carrying ADs, a manual override 30 is provided in an accessible location to cause additional, although not necessarily all of the vehicle closures 14a, 14b, 14c, 14d, 18 to be unlocked. The manual override 30 may also enable the doors to be locked when the vehicle 12 is occupied.

To lock the vehicle once an authorised user 132 has exited the passenger compartment 22, a delay timer (not shown) coupled to a latch position sensor (not shown) may be built into the access control system 10 to cause the controller 24 to signal locking once a certain time has elapsed after the vehicle 12 has been exited. Alternatively, locking occurs once the AD 26 has left the range of the transceiver 44.

If the vehicle is left unattended for an extended period of time (eg airport parking) rotation of the transceiver 44 may be suspended or the rate of rotation reduced to reduce the power consumption thereof and thereby minimise the risk of a flat battery upon the user's return to the vehicle. The transmitter power may also be reduced to minimise power consumption. If rotation is suspended, it is preferable for the transceiver 44 to be directed towards the driver's door 14a during suspension as it is most likely that the authorised user 132 will approach this door first. Once a user is detected, the rotation recommences. Optionally, the motion sensor 42 be integrated into the system so that the transceiver 44 may be powered down whilst the vehicle is moving.

In one class of embodiments the system 10 is programmable by the authorised user or by workshop personnel to change the range of angles over which certain closures are unlocked, as well as the particular closures to be unlocked over each angle so that the system may be tailored to user requirements. For this to be achieved, the system of this embodiment employs input means 56.

One advantage of this embodiment is that a transceiver 44 having a relatively narrow angle of signal transmission may require a reduced power consumption, or have a longer range for the same power consumption in comparison with known passive entry transmitting devices.

Turning now to Figures 1B, 4 and 5, a second embodiment of the present invention is disclosed in which like numerals have, where possible, been used for like parts with the addition of the prefix "2" as compared with Figures 2 and 3.

This embodiment differs from the first embodiment in that no transmitter 115 is provided as part of the access control system 10, and in that the receiver 244 is stationary and comprises in this embodiment four separate receivers designated 212a, 212b, 212c and 212d. The horizontal angle over which each receiver is capable of detecting a signal is restricted by vertical dividers 214a, 214b, 214c and 214d. Thus, by providing multiple receivers it is unnecessary for the receiver to rotate as in the first embodiment, since the angular position of the AD 226 can be detected dependent upon which receiver 212a, 212b, 212c, 212d a signal therefrom is incident.

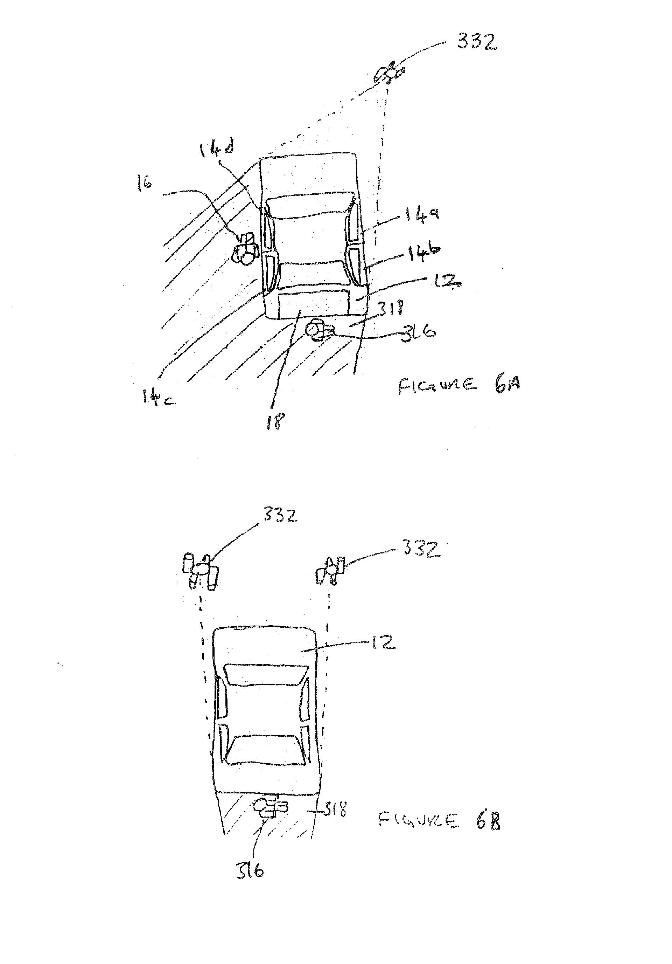

Referring to Figure 5, the receiver 244 is shown located in a similar position to the transceiver 44 of the first embodiment and as such effectively divides the area surrounding the vehicle into four sectors 260, 262, 264 and 266 which substantially correspond to the right side, rear, left side and front of the vehicle respectively. In one class of embodiments, receiver 212d is omitted since no closure suitable for unlocking using the system is provided at the front of the vehicle 212.

The second embodiment is intended for use with an "active" remote keyless entry (RKE) ADs (commonly known as a "plip") or passive entry systems in which the AD transmits periodic signal without being interrogated by a transceiver. RKE ADs 226 generally comprise an infra-red, radiofrequency or ultrasonic transmitter and have their own power source such as a battery. Because the user themselves actively sends an unlocking signal to the receiver 244 or the AD 226 sends a periodic signal, it is unnecessary to provide a corresponding transmitter on the vehicle 12 to actively search for and interrogate the AD as in the previous embodiment. Once a signal is received from the AD 226, the controller 24 of the access control system 10 determines the appropriate closure(s) to unlock and sends unlock signals to the corresponding lock actuator(s) 38 in a similar manner to the controller 24 of the first embodiment. Again, the manual override 30 may be used to lock/unlock the remaining closures. When a user wishes to lock the vehicle, he/she actuates the identification means a second time to trigger the locking of all of the latches 16, 18 if an "active" AD is used. If a periodic signalling AD 226 is used, locking is triggered once the transceiver fails to receive a signal from the AD for a predetermined period of time.

Whilst the second embodiment has been described with reference to a powered AD 226, it should be appreciated that if a suitable transmitter (not shown) were to be provided, the access control system of the this embodiment could be used with a non powered AD 26 similar to that disclosed in the previous embodiment. Preferably, the transmitter may be provided in the middle of receivers 212a, 212b, 212c and 212d.

It should be understood that numerous changes may be made within the scope of this aspect of the present invention. For example, the transmitter and receiver may be physically separated from one another. The receivers of the second embodiment may also be mutually separated so as to have, for example, receivers proximate the front, rear and side windows. Rather than determining the location of a person relative to the vehicle, the system of the first embodiment could be used to track the vector of a person walking towards a vehicle and from this determine the appropriate door to be unlocked. The system may also unlatch the closures by being connected to the corresponding power latch mechanisms. This would be particularly advantageous in the case of a rear boot/trunk lid as they are often not provided with an external latch release means. The system may enable closures to be unlocked sequentially. For example, a user may first walk to the boot causing the boot lid to be unlocked, and the subsequentially walk to the driver's door causing this to then be unlocked. The controller may also output to actuators and the like for adjusting the seating, steering wheel and mirror positions, for example, in order to personalise the vehicle settings for a particular user carrying a response device. The system may be retrofittable to vehicles or may be fitted at the time of vehicle manufacture.

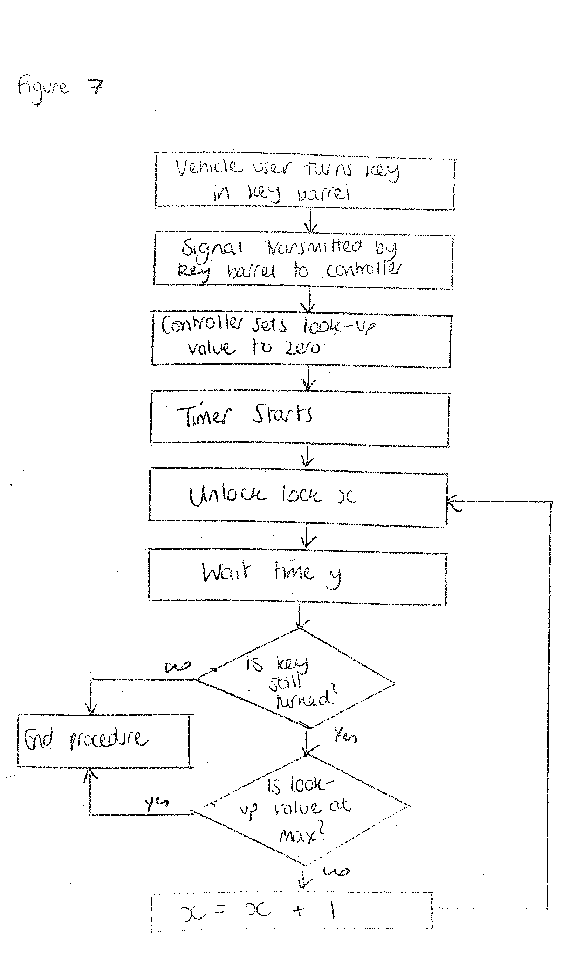

Figures 1C, 6A and 6B illustrate another aspect of the present invention which relates to an alternative arrangement for enabling access to a vehicle for use exclusively with identification means in the form of "active" RKE devices or conventional keys operable in key barrels fitted to vehicle door(s).

Referring to Figure 6A, an authorised vehicle user 332 can be seen approaching a vehicle 12. The user's angle of approach results in him having a blind spot illustrated by the hatched area 318 in which an unauthorised vehicle entrant 316 may hide.

In a clockwise direction, the vehicle has closures comprising right front (RF) door 14a, right rear (RR) door 14b, a storage area 18, left rear (LR) door 14c and left front (LF) door 14d. As illustrated in Figure 6A, if an authorised user 32 were to unlock all of the closures on the vehicle using a conventional "central locking" access control system, in order to enter the vehicle through right front door 14a, unauthorised users 316 would simultaneously be able to enter the vehicle through any one of closures 18, or doors 14c or 14d without user 332 being aware of this until the vehicle is entered.

Turning to Figure 6B, it can be seen that even if two authorised users 332 approach the vehicle, an unauthorised user 316 may still hide in a blind spot 318 towards the rear of the vehicle.

Returning to Figure 1C, the first embodiment of this aspect of the present invention is illustrated schematically. In this embodiment, the controller 24 takes input signals from the key barrel 330 of the right front 14a, left front 14d doors. A signal is supplied when identification means in the form of a matching key (not shown) is inserted and turned in the barrel 330 by the authorised vehicle user 332. Additional inputs to the controller 24 are provided by a lock manual override 30 to the operation of the system and from the input means 56 to change the settings on the system. Also in communication with the controller 24 is a rewritable memory 58 (eg EPROM memory) preferably capable of storing the settings of the system without requiring a permanent power supply. The controller may optionally output to a display means (not shown) within the vehicle to assist in the setting of the system, as well as optionally providing diagnostic data.

The controller 24 may send output signals to right front, right rear, left rear and left front door lock actuators 38 as well as lock actuator 62 on the boot 18 of the vehicle 12.

Turning now to Figure 7, operation of the access control system 10 is illustrated as a flow chart. In use, a vehicle user inserts and turns his/her key in the barrel 330 of door 14a and if the key matches the barrel 330, a signal is transmitted by the barrel 330 to controller 24. In turn, the controller 24 sets a look-up value for the lock *x* 0 and starts a timer that is associated with the controller 24. The look-up values stored by memory 58 are summarised by Table 1 below.

**Table 1**

| Lock *x* | Time *y* |
|---|---|
| Lock 0 = RF door lock 34 | Time 0 = 1 s |
| Lock 1 = LF door lock 42 | Time 1 = 1 s |
| Lock 2 = RR + LR door 36 + 40 | Time 2 = 1 s |
| Lock 3 = Storage area door lock 38 | |

Once the timer has started, the controller 24 signals the door lock actuator 38 to unlock the right front latch 16 immediately thereafter, having queried the memory 58 to determine that lock *x* is initially set as lock 0. The controller 24 then waits a time *y* which for lock 0 equates to 1 second. If, after this time *y*, the key is no longer turned, the controller 24 ends the unlocking procedure. If, however, the key is still turned, the controller 24 then checks whether the look-up value for lock *x* is at its maximum value (ie all of the locks have been unlocked). If this is the case the controller ends the unlocking procedure. However, if the maximum has not been reached, the controller then refers to the next lock *x* in the table, which in this case is the left front door lock 42 and signals the left front door lock actuator 38 to unlock this, and then waits a time *y* which for lock 1 again equates to 1 second. This procedure is then repeated until either the user has decided that sufficient doors have been unlocked and he/she can thus cease turning the key in the key barrel 330, or all of the locks have been unlocked and the procedure also therefore ends.

Once seated in the vehicle, the vehicle users may override the current locked state of any of the closures by actuating the manual override 30. This may be in the form of a conventional sill button in relation to the vehicle side doors 14a, 14b, 14c, 14d or may be one or more electrical switches actuable by the vehicle user. To lock the vehicle after exit, the user turns the key in the key barrel 330 in the opposite direction and in response the controller 24 signals the door lock actuators 38 to lock the latches 16 for all of the closures.

Referring now to Figure 1B, the system of this embodiment may alternatively be used with an AD 226 in the form of a remote keyless entry (RKE) device. Therefore, in this embodiment, key barrels 330 for the right front, left front doors and the storage area closure are replaced by a receiver 244 is capable of detecting signals from whatever type of RKE it is intended to be used therewith.

In one class of embodiment, a short press of the AD 226 results in the driver's door (either the right front or left front door latches 16) being unlocked by default. However, in another class of embodiment, receiver 244 is capable of determining the angular position of the AD 226 relative to the vehicle (as in the embodiment of Figures 1B, 2, 3, 4 and 5) and then signalling the unlocking of the closure lock nearest to the AD 226. Therefore, if the AD 226 is detected as being at the rear of the vehicle a single press of the actuator on the AD results in the boot latch 20 being unlocked, but if the AD is detected near the left front door 14d, the controller signals door lock actuator 38 to unlock the left front door latch 16 first. However, independent of the angular location at which the AD 226 is actuated, extended actuation will result in the controller 24 signalling the unlocking of all closures.

As in the first embodiment of this aspect of the invention, a manual override 30 is provided to lock any closures as desired when one or more users are seated within the vehicle. Once the vehicle user has exited the vehicle, a short actuation of the AD 226 will cause all of the latches 16 to be locked.

In many cases, conventional key barrels 330 are provided on a vehicle fitted with a remote keyless entry system in order to provide a back-up should the AD 226 be lost or malfunctioning. As such, it is anticipated that the embodiments of Figures 1B and 1C may be combined to provide for both the convenience of remote keyless entry and the back-up of having a conventional key, whilst maintaining the unlocking function described above using either the AD 226 or keys.

It should be understood that numerous changes may be made within the scope of this aspect of the present invention. For example, the system may be adapted for vehicles having fewer or more closures than shown in the Figures. Access to the vehicle may be provided by a user supplying biometric data to the vehicle such a fingerprint or a voice input, in which case the term "identification means" should be construed to include such data. The system may also be arranged so as to signal power latches and thereby unlatch the closures. The controller may also output to actuators and the like for adjusting the seating, steering wheel and mirror positions, for example, in order to personalise the vehicle settings for a particular user carrying a AD.

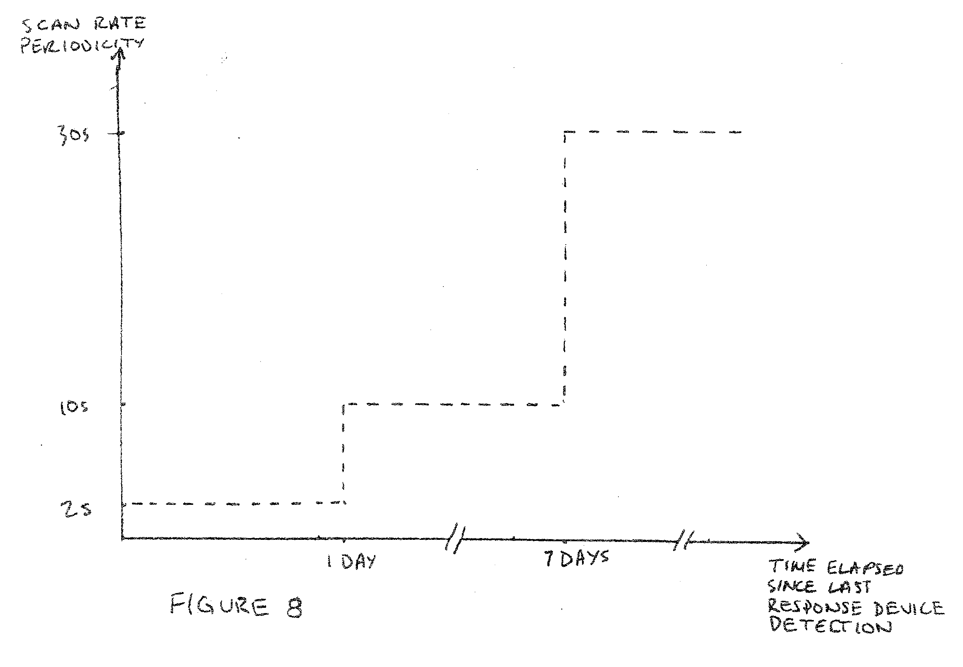

Turning to figures 1A and 8 a further aspect of the present invention is disclosed which relates to means for conserving the power consumed by a vehicle access control system. As explained above, in use, authorised users of the vehicle carry an authorisation device 26 which preferably takes the form of a transponder having an identifier code stored therein. The transceiver 44 periodically scans for the existence of such ADs 26 within its range of operation under the control of controller 24. When such an AD 26 is detected, the transceiver interrogates the response device to obtain the identifier code which is then passed to the controller 24 so that it may be authenticated against codes held within the memory 58 associated with the controller 24. If there is a match, the controller 24 then sends a signal instructing the door lock actuator 38 to unlock one or more door latches 16, and the authorising the starting of the engine starter 46. Once the user is seated in the vehicle, switches 66 and 68 may be closed to start the vehicle engine.

In normal use, the transceiver 44 preferably draws its power from an external power source such as vehicle battery 48 or a dedicated local power source 50 for the system 10. The controller 24 ensures that the dedicated transceiver power source is fully charged from the battery 48. However, during long term parking, when the vehicle is not being used, the battery 48 may become exhausted. In such circumstances, the controller 24 senses when the battery 48 falls below a predetermined certain level of charge and instead draws power from the dedicated backup power source, in order to prolong the period during which the vehicle may be accessed beyond the point at which the battery 48 becomes exhausted.

Because vehicle users wish to gain access to the vehicle 12 rapidly, the scanning rate (frequency) is normally set relatively high at, say, two second intervals (0.5Hz). However, at this scanning rate, the battery and in particular the local power source 50, become rapidly exhausted during a long period of non-use.

Therefore, the transceiver 44 of the present invention reduces the scan rate dependent upon the time elapsed since a AD 26 device was previously detected. In some classes of embodiment, the scan rate reduction may be in direct proportion to the time elapsed or may reduce exponentially, logarithmically or in accordance with another suitable mathematical relationship. However, in preferred embodiments, the scan rate reduces in a 'stepped' manner. The reduction may be a single step or multiple steps.

Referring now to Figure 8, a graph illustrating an example of such variable scan rate is shown. The scan rate, elapsed times and number of steps may, of course, be altered according to particular user requirements. It can be seen from Figure 8 that for an initial period of one day since the AD 26 was detected, the scan rate is once every two seconds (in order to allow for a rapid response to the approach of a potential vehicle user when the vehicle is merely left overnight, for example). Beyond one day, the rate then drops to once every ten seconds (0.1 Hz) to allow for a slightly less rapid response when the vehicle is left for a longer period, such as during airport parking, for example. This rate reduction results in a reduction in power consumption that potentially extends the life of the power source by five times in comparison with the two second scan rate.

After seven days of non-use, which could in practical terms represent the vehicle being left for sale with a dealer, or during a winter layup, the scan rate reduces to once every thirty second (0.033 Hz), thereby potentially increasing the battery life fifteen fold with respect to the two second interval scan rate.

Clearly, such a response delay would be unacceptable in day to day use, but would not present a problem when the vehicle is to be operated for the first time after a long period of non-use.

In order to determine the time elapsed since the last detection of a AD 26, a time logging device such as an in-built quartz timer and counter (not shown) are advantageously incorporated into the controller 24.

It should be understood that numerous changes may be made within the scope of this aspect of the present invention. For example, alternative types of scanner using other forms of electromagnetic radiation such as microwave, or infra-red, may be employed, as may sonar or ultrasonic scanners. It is envisaged that the scanning device may be used in other fields such as building access control, for example.

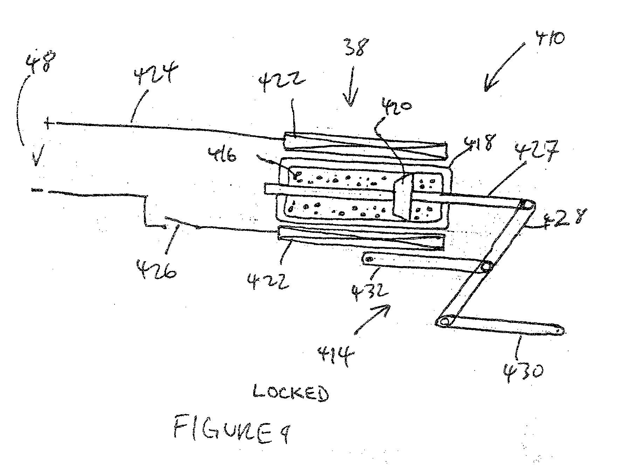

A further aspect of the present invention is disclosed in Figures 9, 10 and 11. Referring to Figure 9, there is shown generally at 410 a locking mechanism comprising a door lock actuator 38 in the form of a motion control device and a linkage arrangement 414 mounted in the latch 16 of vehicle door 14 so as to lock the door when in a closed position relative to the vehicle 12.

The motion control device 38 comprises a cylinder 418 containing a magneto-rheological (hereinafter referred to as MR) fluid 416. A perforated piston 420 is securely mounted on a ram 426, the piston being axially slidable within cylinder 416.

In this embodiment, the piston 420 is shaped to enable movement from right to left in the Figures to require less force than movement left to right. This may act to damp the return of a door handle to which the mechanism is attached. In other embodiments, the piston design may be altered to reverse this, or to make the required force equal in both directions in accordance with the particular requirement of the mechanism or components with which the mechanism interacts.

The cylinder 18 is at least partially surrounded by an electromagnet 422 connected by a circuit 424 to an electrical power source such as the vehicle battery 48. A switch 426 is provided to enable the circuit to be energised, such that when the switch is closed, a magnetic field is induced in the MR fluid by the electromagnet 422. Closure of the switch is preferably controlled by controller 24 (e.g. by using a solenoid type device- not shown). Magnetic shielding (not shown) is preferably provided to ensure that the MR fluid 416 is not influenced by external magnetic fields.

Magneto-rheological fluids are suspensions of small magnetisable particles in a liquid such as oil. MR fluids are normally free flowing and have a viscosity similar to that of motor oil. However, once a magnetic field is applied across the fluid, the fluid consistency becomes almost instantly more viscous. The increase in viscosity is proportional to the magnitude of the magnetic field applied. Electro-rheological fluids (hereinafter ER fluids) function in a similar manner upon application of a potential difference across the fluid.

In this embodiment, the linkage 414 comprises an input arm 430 which in this embodiment is connected to an internal and/or external door handle (not shown) of the associated vehicle door 14 and/or power door latch actuator 36, and an output member 432 connected to an input of a latching mechanism (not shown) of the latch 16. Ram 427 and input arm 430 are pivotally interconnected by a connecting arm 428 at the distal ends of ram 427, arm 430 and connecting arm 428. Output arm 432 is pivotally connected to the connecting arm 428 at a position intermediate the ends of connecting arm 428.

When the locking mechanism 410 is in a first locked state, the potential difference is not applied to electromagnet 422. Therefore, the MR fluid is in a first state with a low viscosity such that the fluid may pass through the perforations in the piston 420 and the piston may move along cylinder 418 in a relatively unhindered manner.

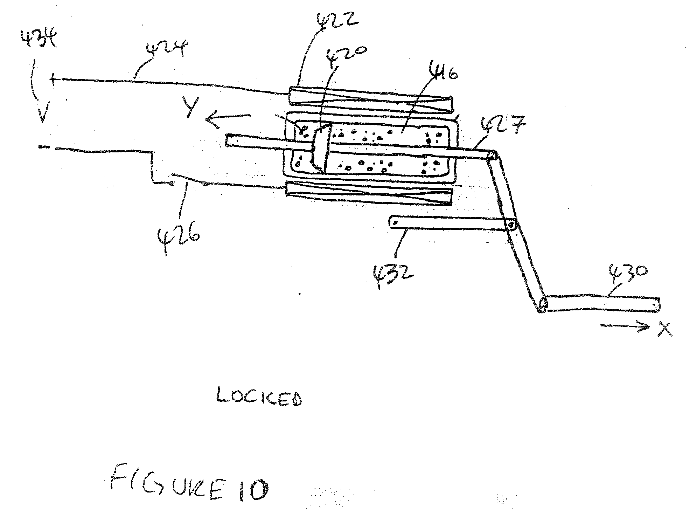

Thus, when arm 430 is caused to moved in a direction X shown in Figure 10 by operation of the handle connected thereto, the force required to displace the piston 420 is lower than the force required to cause arm 432 to unlatch the latching mechanism. Movement of arm 430 in a direction X merely causes a corresponding movement of piston 420 and ram 427 in the direction Y, with substantially no movement of arm 32, resulting in the latch 16 remaining latched.

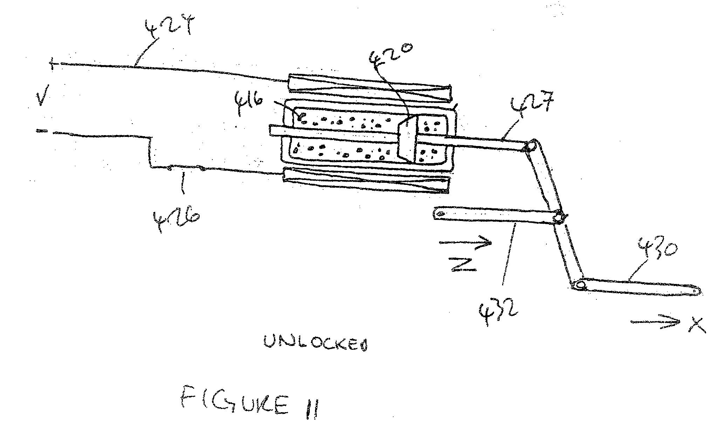

Referring now to Figure 11, it can be seen that switch 426 is now closed under the control of controller 24, thus energising the electromagnet 422. This causes the viscosity of MR fluid 416 to increase so that movement of arm 430 by the door handle in the direction X in turn causes arm 432 to move in a direction Z because in this second unlocked state, the force required to unlatch the latch 16 is lower than the force required to displace the piston 420.

It is therefore apparent that the locking mechanism of this embodiment of the present invention requires fewer moving parts than prior art devices, and is particularly suited to use with or integration into the passive/keyless entry systems described above, that are by their very nature electrically controlled. A particular advantage of this mechanism is that the locking mechanism consumes no power when in the locked state.

It should be understood that numerous changes may be made within the scope of the this aspect of the present invention. In particular, it should be understood that the linkage described is for illustrative purposes only, and that the mechanism may be altered as required. In alternative embodiments, an ER fluid may be used rather than an MR fluid. Furthermore, appropriate alterations may be made to the electrical circuit 424 and/or the design of the cylinder and piston so that the mechanism may be adjusted to take into account changes in the viscosity of the fluid used and in the unlatching load of a particular latch mechanism. In particular, the resistance displacement of the piston may be adjusted to provide differing resistance in either direction of travel as required for the overall function of the mechanism. The mechanism may be fitted to a door surround portion of a vehicle rather than the door itself. It should be apparent that the mechanism may have applications in other fields such as locking mechanisms in buildings.

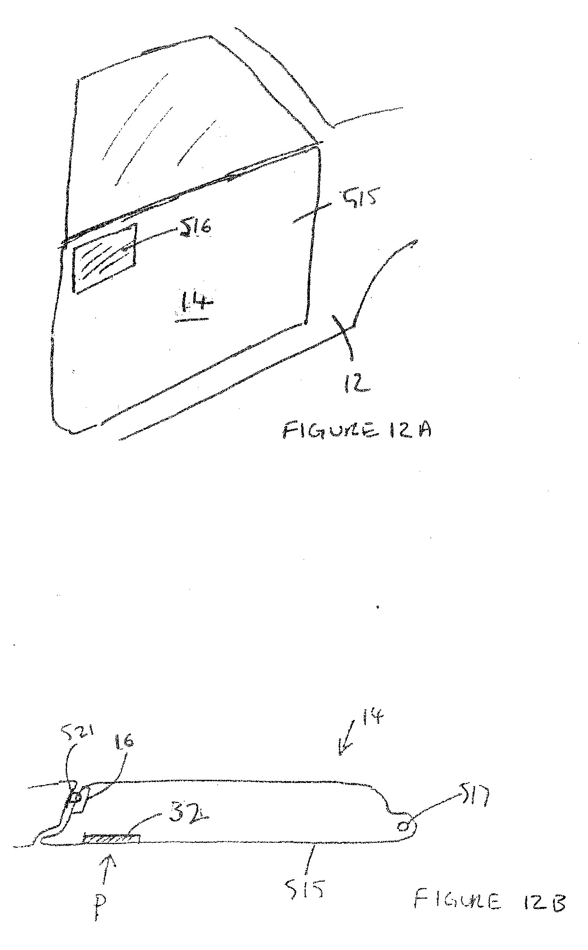

Turning to Figures 12A to 16, a further aspect of the present invention relating to means for accessing a vehicle and engaging a vehicle door is disclosed.

Conventional vehicle door handles essentially serve two functions: firstly, they act as access means to unlatch the associated door and secondly as engagement means by providing a surface that a vehicle user may engage in order to open the door once unlatched. Thus, the terms "access means" and "engagement means" as used below should be understood as means whose primary function is access and engagement respectively, although the means may also perform a secondary function.

Referring back to Figure 1A once the vehicle door(s) have been unlocked using AD 26 as described above, the vehicle user will then wish to open one or more vehicle doors in order to enter the vehicle.

Referring to Figure 12A there is shown a perspective view of the passenger door 14 of a vehicle 12 which is a passenger car in this embodiment. In place of a conventional handle that both unlatches the vehicle and provides a surface by which a vehicle user may engage the door to open it, there is provided access means that is touch sensitive which, in this embodiment, is a touch pad 516. The touch pad 516 is in turn connected to the controller 24 and communicates therewith as described below.

Although in this embodiment, the touch pad is shown in the position of a conventional door handle, in other embodiments the touch pad 516 or other touch-sensitive means may be positioned elsewhere on the vehicle such as the passenger door window, the wing mirrors or on another vehicle panel. The touch pad may be pressure sensitive or detect contact due to a change in its conductivity, but in either case there should be substantially no deflection of the surface being touched.

Turning to Figure 12B, a strain gauge 32 is secured to the inner face of the outer skin 515 of door 14 resulting in the outer skin 515 being, in effect, the touch sensitive means. The strain gauge is in turn connected to the controller 24 and communicates therewith as described below. It can be seen that the strain gauge 32 is located in approximately the same position as touch pad 516 of the first embodiment, but because it is located on the inner face of the door skin, the door skin is uninterrupted, and does not require any apertures to be provided therein.

In use, when a user contacts the appropriate region of the door skin and exerts a pressure P, the (albeit small) deformation of the skin 515 causes the conductivity of the strain gauge 32 to change.

An alternative strain gauge arrangement is shown in Figure 12C. In this embodiment, the gauge 32 is secured in a snaking arrangement to the inner face of the door skin 515. Thus, in this embodiment, the user may touch substantially anywhere on the door skin for detection by the strain gauge to occur.

In other embodiments strain gauges could alternatively be arranged on the door hinge 517, latch 16, striker 521 or door seal (not shown) so as to detect pressure applied to the door 14. Furthermore, force transducers may be used in place of the strain gauge. Additionally or alternatively, a strain gauge may be arranged on the window seal (not shown) to detect movement of the window glass 524 relative to the rest of the door 14, or a transparent touch sensitive sheet of the type used on computer monitors and the like could be applied to the window to enable the user to gain entry by pressing on the window glass 524.

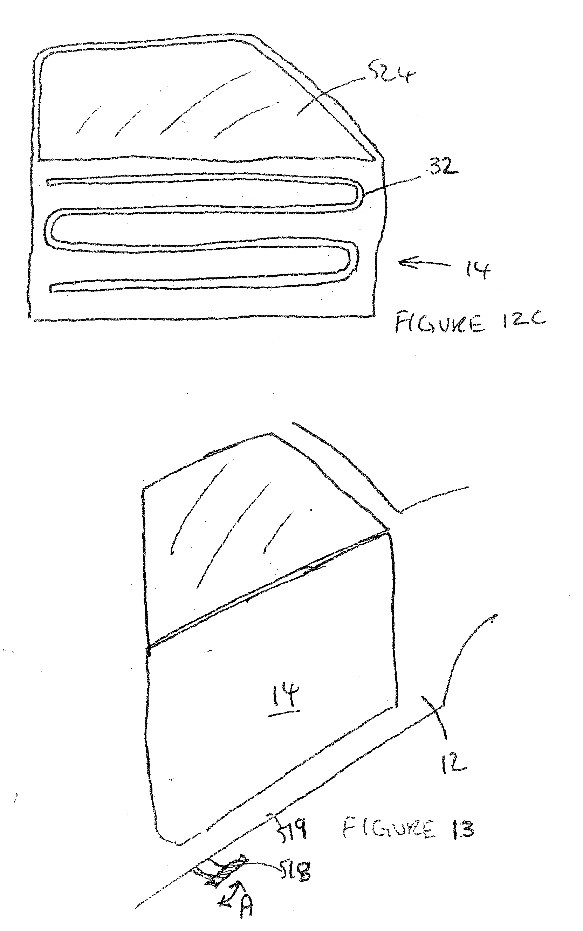

Turning to Figure 13 there is shown a foot operated access means such as a foot operated pedal 518 mounted to the sill area 519 of a vehicle. In this embodiment, actuation of the pedal 518 in the direction A signals the controller as described in more detail below. Alternatively, the pedal may be pressure sensitive, so that substantially no actual deflection occurs. In a preferred embodiment, the pedal is only deployed from a stowed position in the sill 519 when actuation thereof is required (eg once the latch 16 of door 14 has been unlocked), thus preventing the fouling of the pedal on foreign objects when the vehicle is in motion. One advantage of this arrangement is that the pedal 518 may be actuated when the user has no free hands.

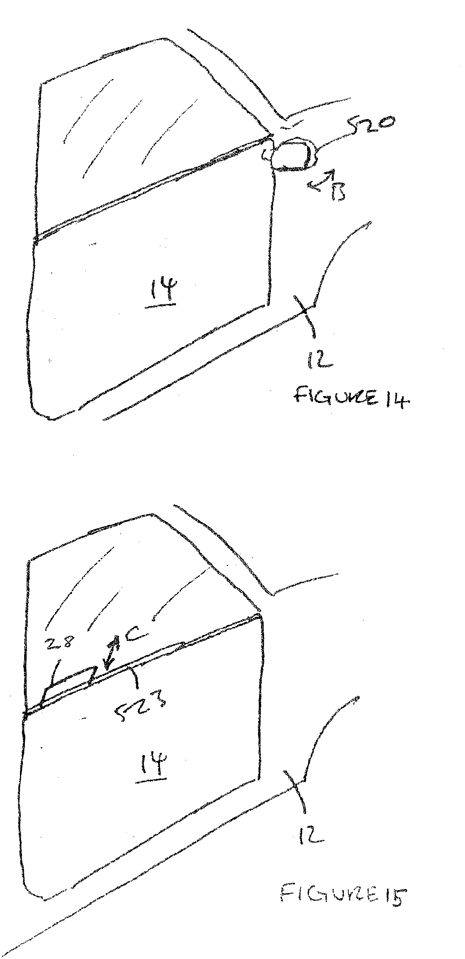

Figure 14 illustrates a fifth embodiment of this aspect of the invention in which a vehicle wing mirror 520 is used in the place of the conventional door handle as access means. In one class of embodiment, the mirror may be simply be provided with a switch or touch-sensitive means similar to the first embodiment in order to signal the controller. Alternatively, where a vehicle is provided with powered mirrors, physical movement of the mirror in a direction B may be converted into a signal that is sent to the controller 24 to initiate release as described in more detail below.

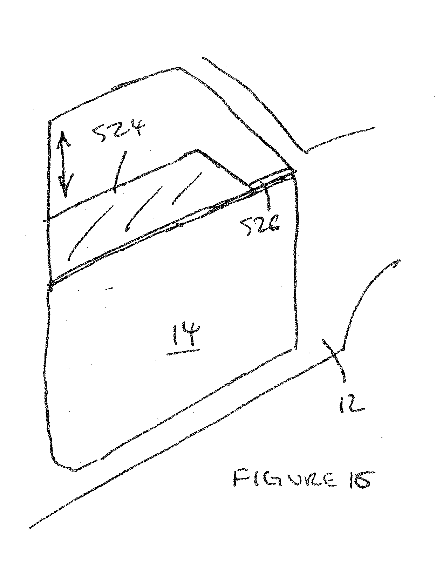

Turning to Figure 15, there is illustrated an engagement means according to a sixth embodiment of this aspect of the present invention. In this embodiment the engagement means comprises a deployable handle 28 that in normal circumstances is retracted within the vehicle door. However, upon a signal from the vehicle controller 24, (eg once the latch 16 of door 14 has been unlocked) the handle 28 is deployed from the "waistline" (the sill portion where the door panel meets the window) 523 of the vehicle. In one embodiment, the handle 28 is merely provided as a convenient surface that a vehicle user may engage to open the door 14. However, in variant form, the handle may also be operably connected to the vehicle latch 16 such that engagement thereof causes the door to become unlatched. The interaction of the handle 28 and the controller is described in more detail below.

The engagement means according to a seventh embodiment of this aspect of the present invention is shown in Figure 16. In this embodiment the engagement means is provided by the window sill 526 of the door 14. Clearly, for reasons of security, the door window 524 will usually be left in a closed position when the vehicle 12 is left unattended. However, when a signal is received from the controller 24 (eg once latch 16 of door 14 has been unlocked) as described in more detail below, this causes the window regulator (not shown) to lower the window glass 524 and thus enable a vehicle user to grasp the sill or top of the window glass and open the door.

In installations where the authorisation device 26 causes just the unlocking of one or more door/closure latches 16, 20 the user then actuates either touch pad 516, strain gauge 32, door skin 515, window 524 or wing mirror 520 by hand or foot pedal 518 by foot (for clarity, only strain gauge 32 is shown in Figure 1A). Actuating the relevant access means signals the controller 24 which in turn signals the door latch actuator 36 to unlatch door latch 16. Of course, the controller 24 will only permit those closures 14,18 that have been unlocked to be unlatched subsequently. The controller 24 preferably also signals the deployment of either handle 28 (if fitted) or the window regulator to drop the window glass 524 so that a surface is available for the user to engage by hand and open the door 14. In its simplest form, however, specific engagement means may be dispensed with because the force exerted on the door by the door seals (not shown) is generally sufficient to cause the door to open enough when the door is unlatched for a user to engage an edge of the door by hand and open it. In some cases of embodiment the door hinge and/or door check may also exert an outward force that tends to cause the door to open.

In a preferred embodiment, when a touch pad 516 or strain gauge 32 is used as an access means and is mounted on the door 14, the controller only signals the unlatching of the door once the user ceases to touch the touch pad, door skin or window. This avoids the possibility of the force due to contact between the user's hand and the touch pad, door skin or window counteracting the seal force and preventing the door opening by a sufficient amount, and also substantially avoids the risk of discomfort being caused to the users by the door opening against their fingers.

If the vehicle is fitted with a foot pedal 518, the signal from the transceiver 44 or receiver 244 (Figure 1B) to the controller 24 preferably causes the controller to signal the lowering of the foot pedal 518 from a retracted position in the sill 519 to a deployed position where it may be actuated by the foot of the vehicle user.

In embodiments where the controller 24 signals the door latch actuator 36 to unlatch the door latch 16 in response to signals from the transceiver 44, the access means may be dispensed with. Similarly, in embodiments where the handle 28 is operably connected to the latch(es) 16, the access means may be dispensed with.

Once the vehicle user has entered the vehicle and closed the door, the controller signals the retraction of the pop-up handle 28 and/or of pedal 518 as appropriate, or signals the closure of the window 524. Optionally, the vehicle motion sensor 42 may be connected to the controller 24 such that the controller may signal the locking of door/closure latches 16, 20 if the vehicle exceeds a certain predetermined speed such as 5 kilometres per hour, for example.

To summarise, the access means of Figures 12A to 14 may operate separately or in conjunction with the engagement means of Figures 15 and 16. Likewise, the engagement means of Figures 15 and 16 may operate separately from the access means of Figures 12A and to 14.

It should be understood that numerous changes may be made within the scope of this aspect of the present invention. For example, the system may be adapted for use with other vehicle doors such as sliding doors or rear doors and alternative types of scanner such as sonar, ultrasonic or infra-red type scanners may be used in place of a radio frequency scanner. The invention may be adapted for use with conventional remote keyless entry (RKE) "plip"-type locking devices rather than a passive entry system. Furthermore, touch sensitive means such as strain gauges may be employed as exit means on the inside of doors to permit exit from as well as entry to vehicles. Likewise, the engagement means described above may be deployed from the interior of the vehicle to assist in closing vehicle doors.

A further aspect of the present invention provides means for determining the appropriate locked state of the vehicle closures. Once a user is inside the vehicle 12, the access control system 10 is capable of determining the locked state of the vehicle doors 14. This is achieved by incorporating person sensing means which in this embodiment is an infra red (IR) sensor 54 in the vehicle passenger compartment 22 and which arranged to be in communication with the controller 24.

An interior authorisation device detection means, preferably a short range radio frequency transceiver 52 is arranged to detect and interrogate the authorisation device 26 when inside the vehicle passenger compartment 22. In alternative embodiments, the authorisation device may be a conventional ignition key and the detection means a conventional ignition lock system. The manual lock override 30, preferably in the form of a switch, provides a further input into controller 24.

In use, once one or more vehicle doors 14 have been unlocked, a delay is preferably provided to enable the user to enter the vehicle before the subsystem of this aspect of the present invention comes into operation. The subsystem 10 advantageously remains in a standby state up until this point to minimise battery drain.

Once the authorised user carrying AD 26 has entered the vehicle, the presence of the AD is detected by the interior transceiver 52 which signals the controller 24 to indicate the presence of the authorised user within the vehicle. Under normal circumstances, the controller 24 does not signal door lock actuators 38 such that the door latches 16 remain unlocked. However, in a preferred class of embodiments, the manual override 30 enables the authorised user to lock the vehicle doors, if for example they require protection from intruders whilst in the vehicle. Optionally, the controller 24 may signal the door lock actuators 38 when the motion sensor 42 signals that the vehicle has exceeded a certain speed such as 5 km/h, for example.

If the IR sensor 54 detects and signals the controller 24 of the presence of one or more people in the passenger compartment 22, but no authorisation device 26 is detected, the controller determines that there are unauthorised people in the vehicle. Under normal circumstances the controller 24 signals the locking or superlocking of the vehicle doors in this situation. However, an alternative mode of operation may cause the vehicle to remain unlocked when unauthorised people are in the vehicle, either in response to a further manual override input e.g. by input means 56 (not shown), preferably in the form of a PIN or other code, or to pre-programmed instructions of the controller 24.

Once one or more vehicle doors have been unlocked due to a detection of the authorisation device 26 by the external transceiver, and a predetermined period of time elapsed in which neither the authorised user nor any unauthorised people have entered the vehicle, the controller 24 signals the super locking of the vehicle door locks as a security measure. Alternatively, the vehicle will remain unlocked whilst the authorised user continues to be detected by the external transceiver 44 with super locking only occurring as a fail-safe measure once the user moves out of its range.

To exit the vehicle, the authorised user or unauthorised people may manually override the locking if single locked by pulling a sill button attached to the latch 16, for example. However, only an authorised user may unlock the vehicle when superlocked.

It can be seen that this aspect of the present invention provides enhanced security to both authorised vehicle users and vehicles themselves whilst operating in an unobtrusive and reliable manner.

Numerous changes may be made within the scope of this aspect of the present invention. For example, alternative means for detecting people in the vehicle may be used such as pressure sensors in the seats or barometric sensors. It should be appreciated that this aspect of the present invention has applications outside our vehicle access control and may be used in building access control, for example.

A further aspect of the present invention provides a subsystem of the access controls system that determines whether vehicle occupants may start the vehicle 12.

In some classes of embodiments, the interior and external transceivers 52 and 44 may be combined. Referring to Figure 1A, the vehicle 12 is fitted with transceivers operably connected to the vehicle engine starter 46 by an electrical circuit. In this embodiment, the operable connection is via controller 24, but this need not necessarily be the case. Although transceivers 44, 52 and 53 are shown separately, all three could in practice be mounted within the same housing, for example. Input means, preferably in the form of switches 66 and 68 or touchpads is provided in the circuit connecting the controller to engine starter 46.

As explained above, external transceiver 44 periodically scans for the existence of corresponding authorisation devices 26 outside the vehicle 12. Once a compatible authorisation device 26 is detected, the transceiver 44 interrogates the authorisation device to obtain an identity code associated with that particular device.

In this aspect of the present invention, the external transceiver 44 then compares this code with codes held in a first block of memory 58 associated therewith to determine whether that AD 26 has the first level of authorisation required to permit access to the vehicle 12. If this is the case, the controller 24 signals the unlocking of one or more door latches 16. An authorised vehicle user may then unlatch a door latch and enter the vehicle as described above.

The driver's seat transceiver 53, has a relatively low scanning power and/or is directional, being targeted specifically at driver's seat (not shown). In particularly preferred classes of embodiment, the driver's seat transceiver 53 is positioned under the driver's seat with the scanning directed upwardly, or is positioned above the driver's seat and directed downwardly. Both of the aforesaid arrangements mean that the scanning power of the driver's seat transceiver 53 is less crucial to the successful operation of the transceiver 53 within the immediate area of the driver's seat only.

If a vehicle user carrying authorisation device 26 is seated on the driver's seat, the authorisation device 26 will come into range of the driver's seat transceiver 53 and will be interrogated by the transceiver 53. The interrogated data is passed to controller 24 which looks up the identity code of the authorisation device 26 in a second block of memory 58 to determine whether that particular authorisation device has the second level of authorisation required to start the vehicle. If this is the case, the driver's seat transceiver 53 energises/signals the engine starter 46. However, unless switches 66 and 68 are closed/actuated, the signal will not reach the starter 46.

Therefore, a user seated in the driver's seat and having authorisation device 26 with the second level of authorisation must close both switches 66 and 68 in order to start the vehicle.

In a preferred embodiment, the switches are mounted on a steering wheel of the vehicle and are sufficiently far apart to prevent their simultaneous closing by a single hand. Typically, a spacing of 250 mm is likely to be sufficient. Therefore, in order to start the vehicle, both switches must at the same time be actuated/in a closed state, meaning that both the user's hands must be in the region of the steering wheel. In a particularly preferred embodiment the switches 66, 68 are located such that when the steering wheel is grasped they fall easily to hand. Indeed, in some embodiments, no further action other than gripping the steering wheel is required to actuate the switches. The switches may be monostable (i.e. stable in only one position, such as in the off position) or bistable (i.e. stable in two positions, such as in both on and off positions), and in a preferred embodiment are touch sensors. A third switch/input (not shown) is preferably provided to enable the engine to be stopped once it is running.

However, if a vehicle user having the second authorisation level is not seated on the driver's seat, the authorisation device 26 will be out of the range of the driver's seat transceiver 53. Therefore it is not possible for a non-driving user to start the vehicle even if they are seated in the driver's seat and carrying the authorisation device having the first level of authorisation, and even whilst a user having a second level of authorisation is seated outside the range of the driver's seat transceiver 53.

The system preferably also operates in reverse, so that when the authorisation device moves out of range of the second and first scanning means, the vehicle is respectively stopped and locked, although this may be overridden by manual override 30, as necessary.

It should be understood that numerous changes may be made within the scope of this aspect of the present invention. For example, the start system may also be used to store user preferences such as seat and steering wheel position, with the driver's seat only being adjusted when an appropriate authorisation device is detected in the immediate vicinity of the driver's seat. Individual sensors may be provided for one or more passenger seats so that personal preferences may be set for each passenger seat by the entry and start system. Alternative input means such as touch sensors may be provided. The scanning means may alternatively scan biometric data such as fingerprints or retinal data for use as an identity code for a particular user and may operate using alternatives to electromagnetic radiation such as ultrasonic or sonar sound waves. In other embodiments, more than two levels of authorisation may be used so as to control a user's use of other vehicle features. Furthermore, the subsystem may have applications in building entry control, for example

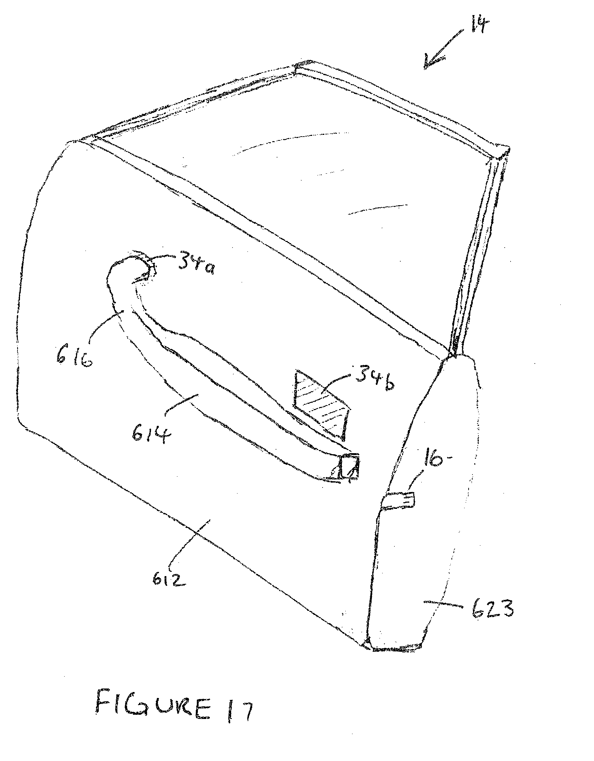

Another aspect of the present invention discloses one means for exiting a vehicle 12 once inside and is shown in Figure 17. The vehicle side passenger door 14 is shown in Figure 17 and comprises an interior trim panel 612 having an arm rest 614 mounted thereon. A handle portion 616 is integrally provided with the arm rest 614 and a strain gauge 34a (hereinafter referred to as the handle strain gauge) is provided to mount the front of the handle 616 to the trim panel 612 such that pulling on the handle 616 produces an output, as described in greater detail below. A further strain gauge 34b in the form of a panel (hereinafter referred to as the trim strain gauge) is mounted on the trim panel 612 above and towards the rear of the arm rest portion 614 such that pressing thereon produces an output. For clarity both strain gauges are designated by reference 34 on Figure 1A.

Gauge 34a is located such that if a vehicle user grasps handle 616 and rests his/her arm on the upper face of arm rest 614 the elbow or lower arm will contact the strain gauge panel 34b. Although the gauges 34a and 34b are visible in Figure 17, they may in alternative embodiments be hidden for aesthetic reasons. In this embodiment, the strain gauges 34a, 34b comprise first and second input means of door inner release means.

A power door latch 16 (ie a latch that may be released by the use of an actuator motor or the like) is mounted on the rear face 623 of the door.

Referring to Figure 1A, controller 24 receives inputs from the handle and trim strain gauges 34a and 34b, as well as retaining data on the current locking status of latch 16, stored in this embodiment by memory 58. The status value stored in the memory is altered when the controller 24 signals the door lock actuator 38 In other classes of embodiment, a separate lock status indicator (not shown) is supplied with status data by door lock actuator 38 and which may then be supplied to controller 24.

The vehicle motion sensor 4 provides a further input signal to the controller 24 when the vehicle 12 is travelling in excess of a predetermined speed (e.g. 3km/h).

In response to the inputs from the aforesaid components, the controller 24 determines the appropriate state of the door latch 16 and signals a power door latch actuator 36 and/or door lock actuator 38 accordingly. It should be appreciated that similar components and interconnections may be provided for each closure provided on the vehicle, and that individual controllers may be provided for each closure, or the single controller 24 may control the function of all closures as is illustrated.

For the avoidance of doubt, following terms relating to latch locking states are now defined:-

A latch is in an unlocked security condition when operation of an inside release means or an outside release means causes unlatching of the latch.

A latch is in a locked security condition when operation of an outside release means does not unlatch the latch but operation of an inside release means does unlatch the latch.

A latch is in a superlocked security condition where operation of an outside or an inside release means does not unlatch the latch. In particular it should be noted that multiple operations of the inside and outside release means, in any sequence, does not unlatch the latch.

A latch is in a child safety on security condition when operation of an inside release means does not unlatch the latch but operation of an outside release means may or may not unlatch the latch depending on whether the latch is an unlocked or locked condition.

Override unlocking is a function whereby operation of an inside release means, with the latch in a locked condition, causes unlocking of the latch.

Note that override unlocking is applicable to a latch in a locked child safety off condition, and is also applicable to a latch in a locked child safety on condition. In particular starting from a locked child safety on condition of a latch having override unlocking, an actuation of the inside release means will unlock the door, but this operation or any subsequent operation of the inside release means will not unlatch the door since the child safety feature is on. Nevertheless, once the latch has been unlocked by actuation of the inside release means, a subsequent operation of the outside release means will unlatch the latch. In particular it should be noted that this situation is different from a superlocked latch since in the former case a particular sequence of release means operations, i.e. operation of the inside release means followed by operation of the outside release means, will unlatch the latch. This is not the case for superlocking.

One pull override unlocking is a function whereby with the latch in a locked child safety off condition a single actuation of the inside release means results in unlocking of the door and also unlatching of the door.

Two pull override unlocking is a function, whereby with the latch in a locked child safety off condition a first actuation of the inside release means results in unlocking of the latch but does not result in unlatching of the latch. However, a further operation of the inside release means will then cause the latch to unlatch.

This embodiment, the latch 16 has a child safety function and one a pull override unlocking function, although in other embodiments, the child safety function may be omitted (e.g. for front driver doors) and the latch may have two pull override unlocking.

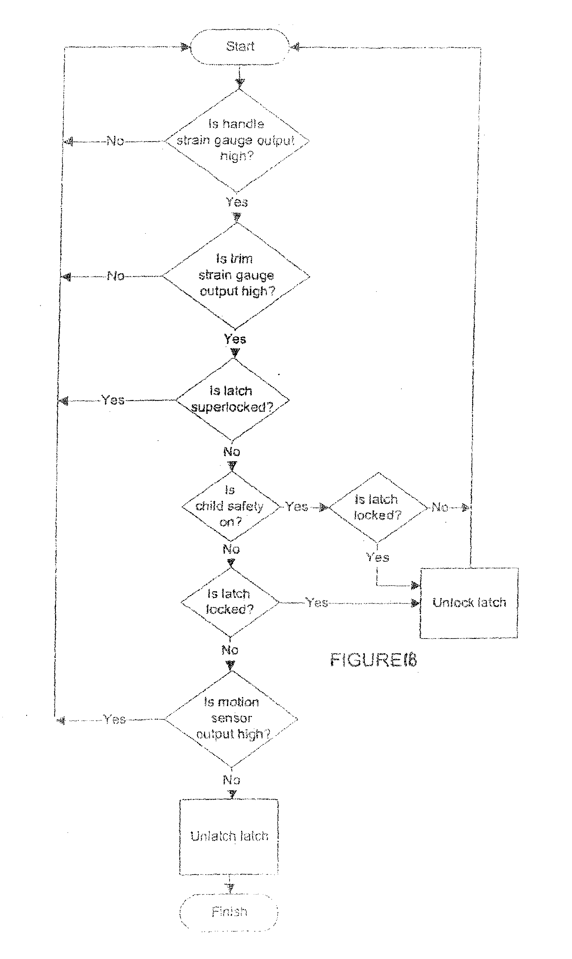

The operation of the mechanism is as illustrated by the flow chart of Figure 18. In use, a user seated in the vehicle grasps handle 616 and rests his/her forearm along arm rest 614. Then, by applying an inwardly directed tensile force to handle 616 and an outwardly directed compression force to strain gauge 34b, output signals from both gauges are simultaneously sent to controller 24. If both signals exceed a predetermined threshold value, the controller 24 then goes on to determine the locked state of latch 16 from memory 58. If the latch is superlocked, no unlatching signal is sent to door latch actuator 38. If child safety is on and the latch is locked, the controller 24 signals the door lock actuator 38 to unlock the latch 16 but not to unlatch it. The controller simultaneously rewrites the appropriate portion of memory 58 to update the lock status of latch 16. Only if the latch 16 is locked or unlocked and the output from the motion sensor 42 is low will unlatching occur. The controller 24 sends the appropriate signal to the door latch actuator 36 in order to achieve this.

Thus, is apparent that the arrangement of the strain gauges 34a and 34b substantially prevents the accidental unlatching of latch 16 and that in a preferred embodiment, vehicle occupant safety is further enhanced by integrating a motion sensor into the mechanism so as to prevent accidental unlatching whilst the vehicle is in motion.

It is envisaged that numerous changes may be made within the scope of this aspect of the present invention. For example, alternative input means, such as switches, force transducers or even a mechanical linkage but may be provided in place of the strain gauges. The positioning of the input means may be altered. For example, one gauge may be provided on the handle so that an output is generates when it is squeezed.

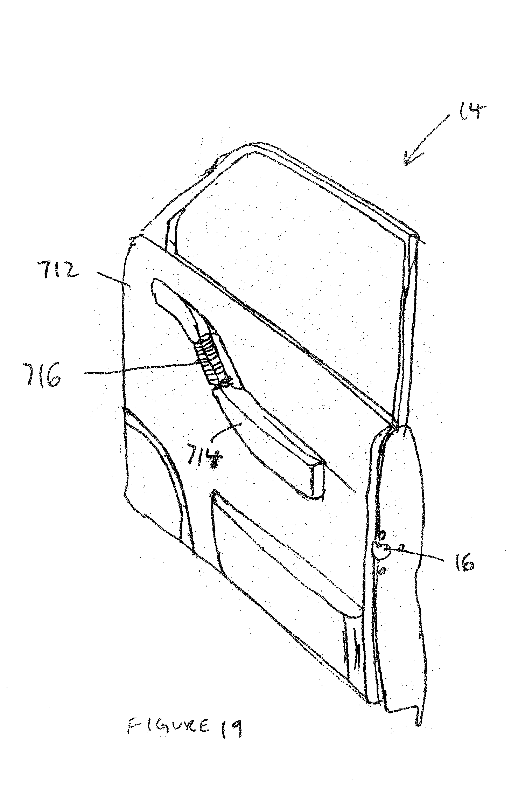

Referring to Figures 19 to 22, an alternative exit means according to another aspect of the present invention for exiting vehicle 12 is disclosed.

Turning to Figure 19, a door 14 comprises an interior trim panel 712 having an arm rest portion 714 provided thereon. Integral with the arm rest is a handle 716 that has the dual function of unlatching a latch 16 provided on the door 14 when the door is closed so as to enable the user to exit the vehicle 12 to which the door is fitted, and also to pull the door into a closed position when it is ajar (not closed). Generally, the simple combination of these function would not work since pulling on a single handle to close the door would prevent the corresponding latch 16 from being latched at precisely the moment when latching should occur, since a pawl of the latch would be lifted away from the latch bolt.

As described in further detail below, in this embodiment the handle 716 is operably connected to the latch by a mechanical connection and an electrical connection. In normal use, actuating the handle 716 closes a switch (not shown) and thereby sends an electrical signal to latch power actuator 36 that causes the latch to unlatch. Further, if the electrical power in the vehicle fails due to a flat battery, for example, a mechanical connection enables the latch 16 to be manually unlatched.

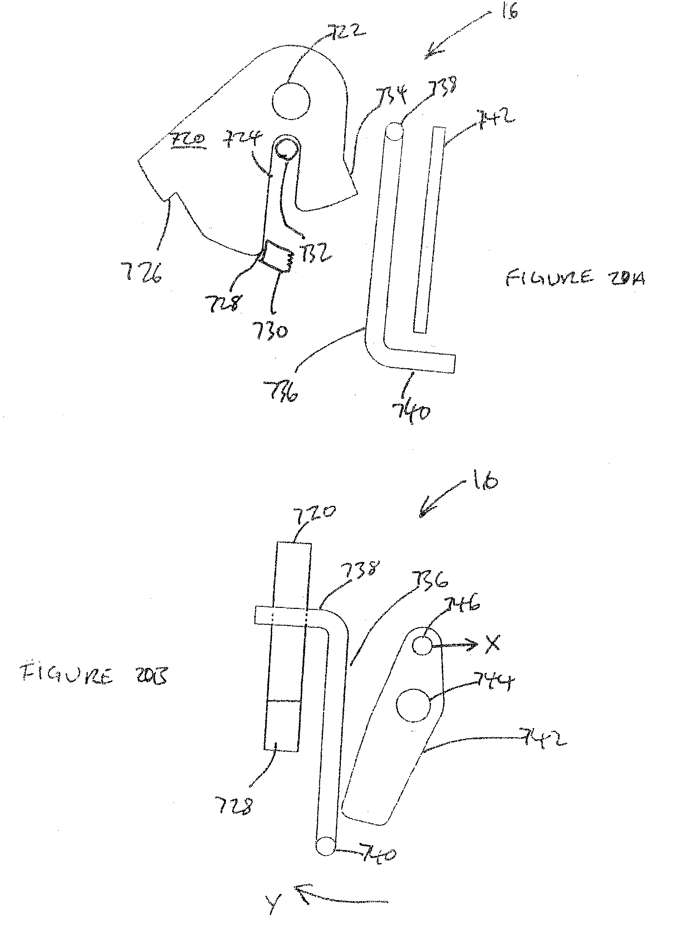

Considering first the mechanical connection, Figures 20A and 20B illustrate the latch 16 in a latched condition and in particular those parts constituting the mechanical connection between handle 716 and the latch. The latch comprises a latch bolt in the form of a claw 720 rotatably mounted about a pivot 722 to a latch chassis (not shown) and having a recess 724 which retains a striker 732 when the latch is latched. The claw 20 further comprises a first abutment surface 726 for a first safety latched position and a second abutment surface 728 against which pawl 730 abuts to retain the claw in a fully latched condition. Pawl 730 is resiliently biased into contact with claw 720. The latch further comprises an inside release lever 742 rotatably mounted to the latch chassis about a pivot 744.

The lever 742 is connected to the handle 716 by a rod or cable (not shown) mounted to a pivot 746 such that actuating the handle 716 pulls the cable or rod in a direction X thereby causing the lever to pivot clockwise in a direction Y as shown in Figure 20B as is well known. The inside release lever 742 is in turn connected by a linkage (not shown) of known type to the pawl such that when the lever pivots in direction Y the pawl 730 lifts.

A block link 736 is mounted for slidable movement in a vertical plane only intermediate claw 720 and lever 742. The link 736 comprises a substantially vertically arranged bar 737 having a substantially horizontally positioned claw abutment projection 738 formed integrally therewith at the upper end of the bar. A substantially horizontally arranged lever abutment projection 740 is formed integrally with the lower end of the bar 737. When viewed along the longitudinal axis of the bar 737, projections 738 and 740 are angled at substantially 90° to each other. As can be seen most clearly from Figure 20B, when the latch 16 is in a latched condition, the block link is arranged such that it does not impede rotation of lever 742.

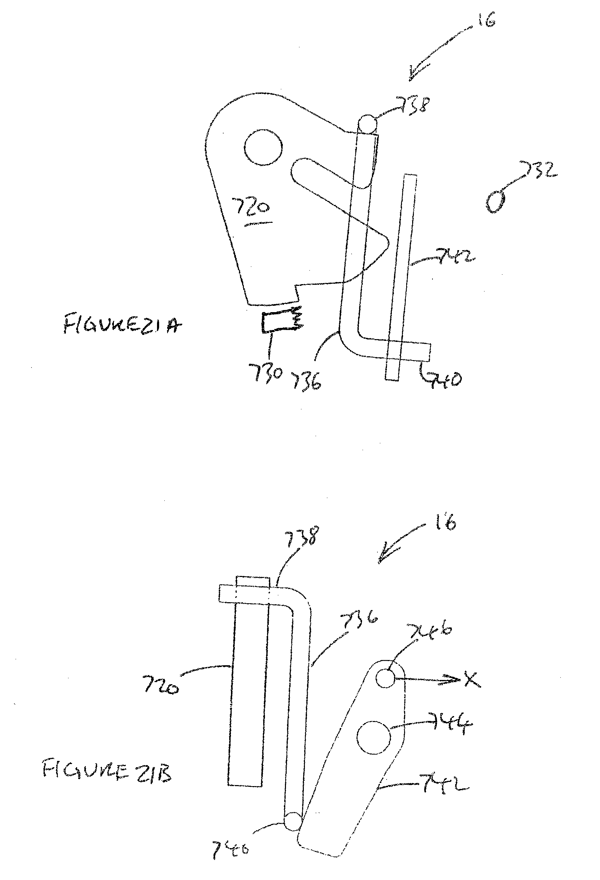

Turning now to Figures 21A and 21B, the latch 16 is shown in an unlatched condition with the door open (note striker 732 is no longer retained in recess 724). Unlatching occurs via a user actuating either the inside handle 716 or outside release handle (not shown) thereby causing pawl 730 to lift out of abutment with either of surfaces 726 or 728. Because claw 720 is biased in an anti-clockwise direction as shown in Figure 21A, anti-clockwise rotation of the claw occurs, thereby releasing striker 732. This simultaneously causes block link 736 to be engaged by an abutment surface 734 of the claw and thus to be lifted. As can be seen most clearly from Figure 21B, in this position it is not possible for lever 742 to further actuate pawl 730 since rotation of lever 742 is prevented by projection 740. Therefore, when the user pulls handle 716 in order to close and latch the door 14, this pulling action is prevented from causing the latching action to fail due to the pawl being lifted out of contact with the claw 720 as the claw rotates during contact with the striker.

Referring to Figure 1A, the electrical connection comprises an inside handle switch (not shown) provided in the place of inside strain gauges 34 and arranged so as to signal controller 24 when the handle 716 is actuated and a door ajar sensor 40 arranged so as to signal the controller 24 when the door is ajar (open). In response to the input signals from switch and sensor 40, the controller 24 determines whether door latch power actuator 36 is to cause the unlatching of the latch 16 and signals the actuator accordingly. The power actuator 36 is arranged so as to lift pawl 730 when an unlatching signal is sent by controller 24. In use, the controller 24 does not send an unlatching signal to the actuator 36 when sensor 40 indicates that the door 16 is ajar.

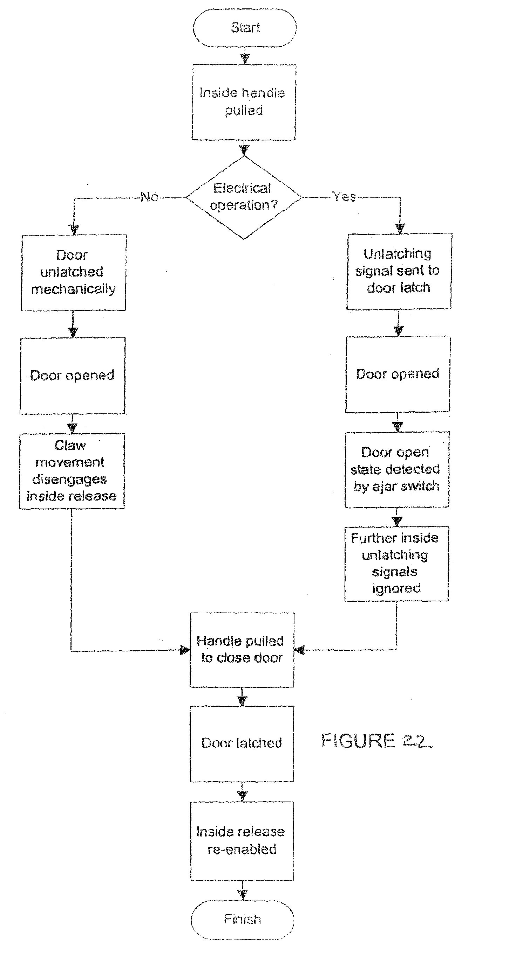

The operational sequence of the mechanism is illustrated by the flow chart of Figure 22. In order to determine whether the latch is to be operated electrically, in one embodiment a small force applied to handle 716 is sufficient to cause the latch to be unlatched electrically, but that if electrical operation is not possible, a larger force must be exerted on the handle 716 to cause mechanical unlatching. Thus, electrical unlatching takes precedence.

It is therefore apparent that both the electrical and mechanical connections are provided with safeguards to prevent the latch being mis-set when the door is being pulled to a closed position, enabling a single handle 716 to act as door engagement means and inside release means.

It should be understood that numerous changes may be made within the scope of this aspect of the present invention. For example, a break rather than a block may be provided in the latch linkage to prevent the latch being mis-set and the mechanism may be adapted for use with other known types of latches. The choice between electrical and mechanical unlatching may be left to the vehicle user by, for example, electrical unlatching being initiated by pulling handle 16 inwardly and mechanical actuation by lifting the handle upwardly. In this embodiment, the block link may be dispensed with since mechanical unlatching would not be caused by pulling the door into a closed position under normal operational circumstances. Rather than the electrical connection comprising a door ajar sensor, a sensor to determine the state of the latch could be employed. The door ajar sensor may be provided in series with the inside handle switch and in which case, a controller may be dispensed with.

Note that the orientations such an "inner" "outer", "vertical" and "horizontal" and directions such as anticlockwise as referred to herein, relate to orientations of components when installed in a vehicle. Nevertheless, such terms should not be construed as limiting.

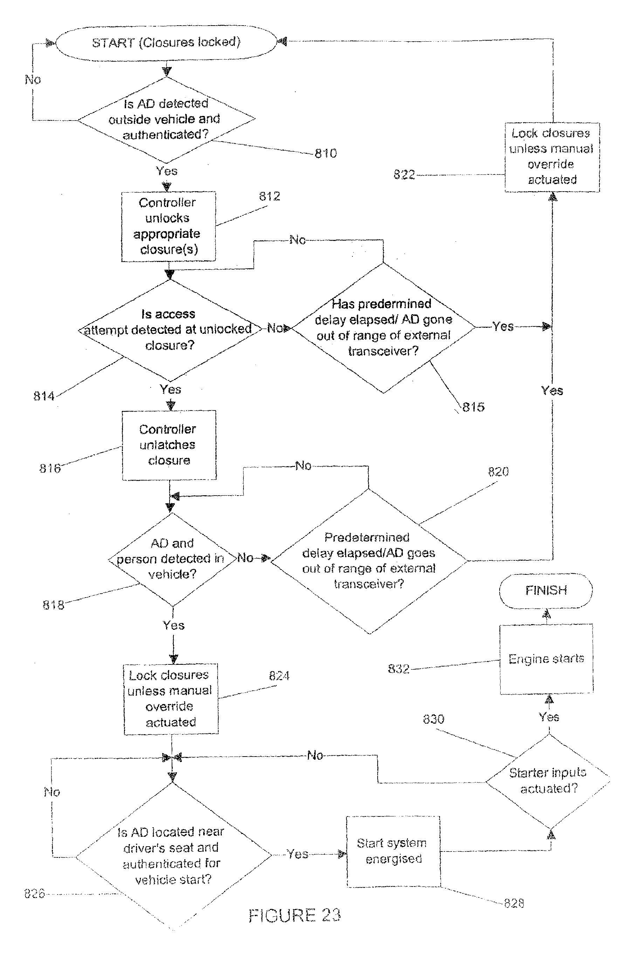

Turning to the flowchart of Figure 23, this illustrates the various procedural steps taken when a vehicle user approaches a vehicle whose doors are locked, in order to enter the vehicle and start the vehicle engine. The illustrated steps assume that the vehicle is fitted with a passive entry system which has all of the possible subsystems described above included therein.

As a vehicle user carrying authorisation device 26 approaches the vehicle whether a user is permitted access to the vehicle is determined using the subsystem of the embodiment disclosed by Figures 2 to 5 and is summarised by processes 810 and 812 of Figure 23. The user may then attempt to unlatch one of the vehicle closures using access means of the embodiments of Figures 12A to 14 and subsequently open the closure using engagement means disclosed in Figures 15 or 16. If no access attempt occurs within a predetermined period or the authorisation device 26 moves out of range of the transceiver the closures are relocked by the controller 24 unless manual override 30 has been actuated. This sequence is summarised by steps 814, 815, 816 and 822 of Figure 23.

Once a closure has been unlatched, the interior short range transceiver 52 and interior infrared sensor 54 determine the appropriate lock state of the vehicle closures as summarised by steps 818, 820, 822 and 824. Thereafter, whether a particular user is permitted to start the vehicle is determined by using the driver's seat transceiver 53 and is summarised in steps 826 and 828. Only if the user actuates the start inputs on the steering wheel will the engine start, as summarised by steps 830 and 832. The access and start procedure is then complete and the user may drive off in the vehicle. Optionally, once the vehicle speed exceeds a predetermined value, the closures may be locked for reasons of safety.

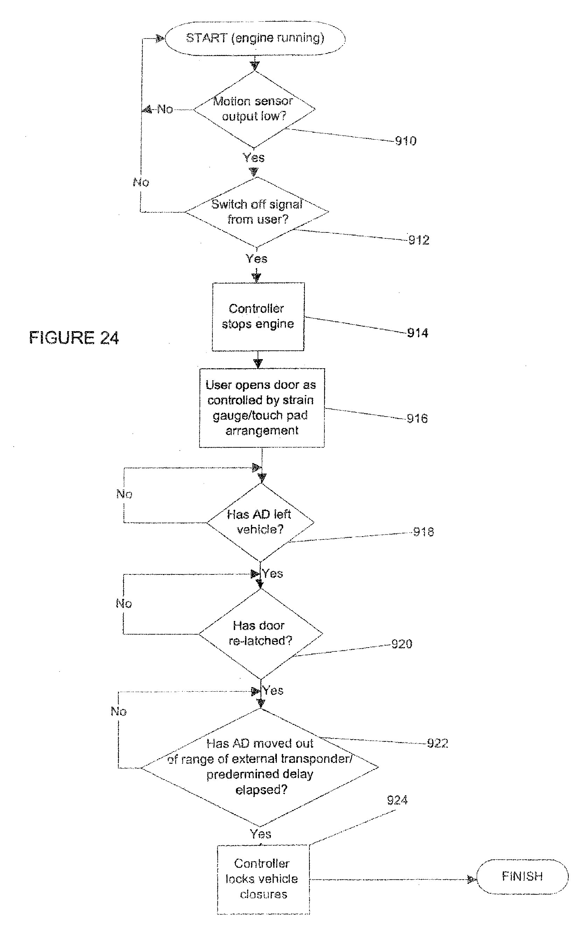

Figure 24 illustrates the engine switch off and vehicle exit procedure incorporating all of the potential sub-systems of the present invention.

At steps 910 and 912 it can be seen that only if vehicle motion sensor 42 output is low and the user signals the switching off of the vehicle engine, will the controller 24 signal the turning off of the engine as illustrated by steps 910, 912 and 914. Only then may the user exit the vehicle by using the strain gauge arrangement of the embodiment of Figures 17 and 18 or the handle arrangement of Figures 19 to 22 (as represented by step 916). Thereafter, only once the authorisation device has left the vehicle, the door has been relatched and the authorisation device has moved out of range of the external directional transceiver 44 or a predetermined delay has elapsed, will the controller signal the locking of the vehicle closures 14 and 18 as illustrated by steps 918, 920, 922 and 924.

It should be appreciated that the present invention provides a complete system for controlling vehicle access and security. It will further be appreciated that the invention does not depend on the various sub-systems all being fitted to a vehicle and that two or more sub-systems may be combined.

It should further be appreciated that numerous changes may be made within the scope of the present invention. For example, although the invention has been described in relation to a vehicle having a conventional internal combustion engine, the invention may equally be applied to electric, fuel cell or other alternatively powered vehicles.

## Claims

1. A vehicle security sub-system comprising person sensing means (54) arranged to determine whether a person is located in the vehicle (12), first authorisation device detection means (52) arranged to detect the presence of a cooperating authorisation device having a first level of authorisation in the vehicle, a second authorisation device detection means (53) arranged to detect the presence of a cooperating authorisation device in an area around the driver's seat and a controller (24), wherein, the controller is arranged to determine the locked state of at least one vehicle closure (14) and the state of a start system of an associated vehicle (12) in response to inputs from the detection means.

2. A vehicle sub-system according to Claim 1 wherein the sensing or detection commences on a predetermined signal.

3. A vehicle sub-system according to Claim 2 wherein the predetermined signal is the unlocking of at least one closure lock of the vehicle

4. A vehicle sub-system according to Claim 3 wherein the unlocking is carried out by a passive unlocking system.

5. A vehicle sub-system according to Claim 4 wherein a device carried to passively unlock the vehicle closure(s) is the authorisation device.

6. A vehicle sub-system according to Claim 5 wherein the system comprises third detection means (44) to scan an area around the vehicle for the existence of one or more authorisation devices having the first level of authorisation so as to enable entry to the vehicle.

7. A vehicle sub-system according to any preceding Claim wherein the first and/or third detection means obtain an identity code from the authorisation device and compare the code with identity codes stored in a corresponding first and second memory to determine whether a particular authorisation device has either the first or second level or authorisation.

8. A vehicle sub-system according to any preceding claim wherein at least one of the person sensing means ceases to scan for people, and the first and second authorisation detection means cease to scan for authorisation devices when no authorisation devices or people have been detected in a predetermined vicinity of the vehicle for a predetermined amount of time.

9. A vehicle sub-system according to any preceding Claim further having means arranged to stop the vehicle and/or selectively lock the vehicle.

10. A vehicle sub-system according to Claim 9 wherein the locking means locks the vehicle once the authorisation device moves out of range of the third detection means.

11. A vehicle sub-system according to Claim 9 or Claim 10 wherein the stop means stops the vehicle once the authorisation device moves out of range of the second detection means.

12. A vehicle latch sub-system comprising a lockable latch mechanism (16) having a rheological fluid (416) acting in a first state to unlock the latch and in a second state to unlock the latch, the sub-system further comprising touch sensitive unlocking means arranged (34a, 34b) such that when touched the unlocking means signals the change of state of the fluid to effect locking or unlocking according to predetermined criteria.

13. A vehicle sub-system according to Claim 12 wherein the sub-system further comprises a vehicle closure (14) and the touch sensitive unlocking means is mounted on an inside face of the closure.

14. A vehicle sub-system according to Claim 13 wherein the touch sensitive means may also signal the unlatching of the latch according to predetermined criteria.

15. A vehicle sub-system according to any one of Claims 1 to 14 wherein the first state the fluid has a relatively low viscosity and in the second state the fluid has a relatively high viscosity.

16. A vehicle sub-system according to any one of Claims 11 to 15 wherein the fluid is a magneto-rheological fluid.

17. A vehicle sub-system according to any one of Claims 11 to 16 wherein a magnetic field is applied across the fluid in its second state and substantially no magnetic field is applied across the fluid in its first state.

18. A vehicle access control and start system comprising at least two of the following sub-systems:
a) an access control system for a vehicle having at least two closures, the system comprising a receiving means, the receiving means being so constructed and arranged as to determine the angular position of an associated authorisation device relative to the receiving means thereby enabling the system to determine the appropriate vehicle closure(s) to unlock and/or unlatch;
b) an access control system for a vehicle having two or more closures, the system, in use, determining the appropriate closures to unlock and/or unlatch in response to the period of time for which an input signal is received by the access control system from an authorisation device;
c) a transceiver for use in periodically scanning for the existence of at least one corresponding remote authorisation device wherein, in use, the rate at which the transceiver scans for the authorisation device decreases as the time since the detection of a previous authorisation device increases, such that the rate of a power consumption of the transceiver reduces during periods of non-use;
d) a touch sensitive access means fitted to a vehicle and arranged in use, when touched, to unlatch a door of a said vehicle and/or facilitate the deployment of an engagement means to be engaged by a vehicle user to assist in the opening or closing of the vehicle door;
e) a foot operated access means fitted to a vehicle arranged in use, when actuated, to unlatch a vehicle door and/or facilitate the deployment of an engagement means to be engaged by a vehicle user to assist in opening or closing the vehicle door;
f) an exterior mirror access means for a vehicle, the mirror being arranged, in use, such that engagement thereof by a vehicle user unlatches a vehicle door and/or facilitates deployment of an engagement means to be engaged by a vehicle user to assist in opening or closing the door;
g) engagement means for engagement by a vehicle user to assist in the opening or closing of a vehicle door, the engagement means being a handle, the handle being deployed from a retracted position, in use, in response to a signal from vehicle entry or exit means;
h) engagement means for engagement by a vehicle user to assist in the opening or closing of a vehicle door, the means being the waist line portion of a vehicle door, a window pane portion of the vehicle door being retracted in use, in response to a signal from a vehicle entry means so as to permit said engagement;
i) a mechanism, comprising a rheological fluid in operable connection with an output and an input, the fluid acting so as to in a first state prevent actuation of the output upon actuation of the input and in a second state permit such actuation;
j) a vehicle locking system comprising person sensing means, authorisation device detection means and a controller, the sensing means being arranged so as to determine whether a person is located in the vehicle and the authorisation device detection means is arranged to detect the presence of a co-operating authorisation device within the vehicle, wherein, in use, the locked state of the vehicle is controlled by the controller in response to a signal supplied by the sensing means and a signal supplied by the authorisation device detection means;
k) a start system for a vehicle, the system comprising scanning means arranged so as to scan an area around a driver's seat of the vehicle to detect an authorisation device having a particular level of authorisation so as to ensure that only a person carrying an authorisation device having this level of authorisation and positioned in the area around the driver's seat may start the vehicle;
l) a start system for a vehicle comprising first and second switches, wherein both switches must be actuated in any order to enable the vehicle to start and wherein the switches are sufficiently mutually spaced to prevent actuation thereof by a single hand of a vehicle user;
m) an inside door release mechanism for a vehicle comprising first and second input means arranged in a mutually spaced relationship on a door inner face and a latch wherein the mechanism is so constructed and arranged to be capable of causing the latch to be unlatched when both input means are actuated simultaneously; and/or
n) a door release and engagement mechanism for a vehicle comprising a combined inside release and door pull handle and a latch operably connected thereto, wherein, in use, the operable connection is disabled when the door is ajar and/or unlatched so as to prevent the latch from being mis-set prior to subsequent re-closure of the door.

19. A vehicle incorporating a vehicle security sub-system according to any one of claims 1 to 11, and/or a vehicle latch sub-system according to any one of Claims 12 to 17 and/or a vehicle access control and start system according to Claim 18.
